# FASCICULE DE BREVET EUROPEEN

(11) **EP 3 939 898 B1**
(45) Date de publication et mention de la délivrance du brevet: **03.09.2025**
(21) Numéro de dépôt: 21184954.2
(22) Date de dépôt: 12.07.2021
(51) Int. Cl.: B65B 7/20, B65B 5/06, B65B 21/00, B65B 43/30, B65B 43/39, B65B 43/44, B65B 43/46, B25J 15/00, B25J 15/06, B65B 21/22, B65B 65/00, B65B 51/02, B65B 51/06

(54) **MACHINE D'ENCAISSAGE DE PRODUITS DANS UNE CAISSE À RABATS DE TYPE CAISSE AMÉRICAINE**
MASCHINE ZUM EINFÜLLEN VON PRODUKTEN IN EINE SCHACHTEL MIT KLAPPEN VOM TYP FALTKARTON
MACHINE FOR PACKING PRODUCTS IN A BOX WITH FLAPS SUCH AS AN AMERICAN BOX

(30) Priorité: 13.07.2020 FR 2007475
(43) Date de publication de la demande: 19.01.2022
(73) Titulaire: Unista, 85600 Treize Septiers (FR)
(72) Inventeur: FORGET, Anthony, 85600 Treize-Septiers (FR); BARREAU, Frédéric, 85170 Les Lucs sur Boulogne (FR)
(74) Mandataire: Cabinet Chaillot

(56) Documents cités:
- EP-A1- 0 025 547
- EP-A1- 2 263 941
- WO-A1-2019/146585
- WO-A1-89/00132
- US-A- 3 863 427
- US-A- 5 042 233
- US-A1- 2016 332 761
- US-A1- 2018 272 643
- US-A1- 2019 389 611

## Description

La présente invention se rapporte au domaine du conditionnement, en particulier de l'encaisse.

La présente invention concerne une machine automatique de type « encaisseuse », c'est-à-dire utilisant des caisses à rabats dites « caisses américaines », et, plus particulièrement, une machine permettant de mettre en volume une caisse et de plier les quatre rabats formant son fond et de supporter la caisse, ainsi formée, en vue de sa fermeture.

Une caisse américaine comprend généralement une ceinture formant les quatre parois latérales de la caisse, à chaque extrémité de laquelle sont rapportés quatre rabats disposés au droit de chaque paroi latérale, formant le fond et le couvercle de ladite caisse. Le fond et le couvercle peuvent être fermés par pliage vers l'intérieur de paires de premiers rabats et de seconds rabats, opposés deux à deux, chaque paire de seconds rabats étant prévue pour recouvrir la paire correspondante de premiers rabats de manière jointive.

Il existe depuis de nombreuses années des machines configurées pour remplir des caisses avec des lots de produits et pour fermer lesdites caisses un fois remplies, comme par exemple les machines décrites dans les brevets américains US 3 863 427 A et US 5 042 233 A.

Dans le brevet US 3 863 427 A, les produits destinés à être mis en caisse sont transportés par un premier convoyeur à bande, les caisses arrivent dans la machine déjà mises en forme et sont transportées par un second convoyeur à bande disposé au-dessus du premier convoyeur. Chaque caisse est poussée de haut en bas pour placer un lot de produits dans ladite caisse, puis des premiers moyens ferment un rabat de fond avant de la caisse, des deuxièmes moyens ferment un rabat de fond arrière de la caisse et des troisièmes moyens ferment des rabats de fond latéraux de la caisse.

Cette machine repose sur l'utilisation d'un convoyeur à bande pour déplacer les caisses, sans préhension de celles-ci, et nécessite l'utilisation de nombreux moyens synchronisés de manière précise pour fermer chaque caisse. La machine est donc complexe, difficilement flexible et volumineuse.

Dans le brevet US 5 042 233 A, les caisses arrivent également déjà mises en forme dans la machine et sont aussi déplacées par un convoyeur à bande, cependant chaque lot de produits doit être déplacé individuellement de bas en haut pour être placé dans une caisse. Ensuite, des premiers moyens ferment des rabats de fond latéraux de la caisse, des deuxièmes moyens ferment un rabat de fond avant de la caisse et des troisièmes moyens ferment un rabat de fond arrière de la caisse.

Cette machine repose elle aussi sur l'utilisation d'un convoyeur à bande pour déplacer les caisses, sans préhension de celles-ci, nécessite l'utilisation de nombreux moyens pour fermer chaque caisse, et nécessite l'élévation individuelle de chaque lot de produits. La machine est donc complexe, difficilement flexible et volumineuse, et sa vitesse est limitée par l'élévation de chaque lot de produits.

On connaît aussi de nombreuses machines de type encaisseuse permettant la mise en forme, le remplissage et la fermeture de caisses américaines. De telle encaisseuses comprennent généralement un magasin de stockage comportant un empilement de flans de caisse auquel est associé un bras de transfert destiné à amener un flan depuis le magasin jusqu'à un premier poste de mise en forme. Le premier poste de mise en forme comprend des moyens de guidage aptes à coopérer avec le flan pour provoquer le pliage des rabats formant le fond de la caisse, ainsi que des moyens de solidarisation, notamment des moyens d'encollage, permettant de solidariser les rabats pliés formant le fond. La caisse ainsi formée avec son fond fermé est ensuite transférée par un dispositif de convoyage vers un deuxième poste de remplissage où des produits à emballer sont déposés dans la caisse, puis vers un troisième poste de constitution du couvercle de la caisse par pliage et solidarisation des rabats qui le constituent, avant l'évacuation de la caisse fermée hors de la machine.

Cependant, dans de telles machines, étant donné que le poste de mise en forme de la caisse permet à la fois le pliage des rabats constituant le fond et la fermeture du fond de la caisse par solidarisation de rabats, il est nécessaire de faire avancer la caisse sur au moins une fois sa longueur dans le poste de mise en forme. Par conséquent, ce poste occupe une place importante et la machine est volumineuse.

La Société déposante a proposé dans le brevet européen EP 3 263 469 B1 une machine plus compacte, à encombrement au sol **réduit,** dans laquelle les postes de formage et d'encaissage sont agencés dans un espace restreint, grâce au fait que la caisse est mise en forme sans solidariser les rabats constituant son fond avant le remplissage et que la caisse est remplie tout en maintenant son fond en position fermée mais non encore solidarisée. Le brevet EP 3 263 469 B1 divulgue une machine selon le préambule de la revendication 1.

Dans les machines mentionnées ci-dessus le remplissage de la caisse implique que les produits à encaisser, qui reposent généralement sur une surface de support telle qu'un convoyeur, soient d'abord soulevés pour être ensuite placés dans la caisse, ce qui prend du temps et suppose l'utilisation de moyens de préhension des produits.

La Société déposante a cherché à proposer une machine d'encaissage dans une caisse américaine qui permet d'éviter ces opérations de préhension des produits pour le remplissage de la caisse, et qui permet donc l'encaissage de produits plus rapidement et à un coût inférieur, tout en offrant une solution plus flexible grâce à l'utilisation de moyens de préhensions plus simples.

La solution selon la présente invention repose sur l'utilisation des moyens de préhension de caisse, déjà connus pour la mise en volume des parois latérales de la caisse, afin de déplier vers l'extérieur au moins trois des quatre rabats qui formeront le fond de la caisse puis de venir coiffer les produits avec la caisse ainsi mise en volume, alors qu'ils reposent sur la surface de support, et sur le déplacement subséquent de la caisse et des produits ainsi coiffés par rapport à des moyens de pliage configurés pour plier par le dessous les premiers rabats de fond tout en offrant aux produits coiffés un support tant que les deux premiers rabats de fond n'ont pas été pliés en position fermée.

La présente invention a ainsi pour objet une machine d'encaissage de produits dans une caisse à rabats de type caisse américaine, la caisse comprenant ainsi deux premières parois latérales opposées et deux secondes parois latérales opposées, les premières parois latérales étant prolongées chacune aux deux extrémités par un premier rabat tandis que les secondes parois latérales sont prolongées chacune aux deux extrémités par un second rabat, la machine comprenant des moyens de préhension de caisse aptes à déplacer dans l'espace une caisse mise en volume et des moyens de constitution du fond de la caisse par pliage des premiers rabats et seconds rabats destinés à constituer le fond de la caisse, dits rabats de fond, les moyens de constitution du fond de la caisse comprenant des premiers moyens de pliage pour plier les premiers rabats de fond en position fermée et des seconds moyens de pliage pour plier les seconds rabats de fond en position fermée, caractérisée par le fait que la machine comprend un support d'entrée qui présente une surface de support plane horizontale destinée à supporter un lot de produits à encaisser, par le fait que les moyens de préhension sont en outre aptes à plier vers l'extérieur au moins trois des rabats de fond de façon à ce qu'ils soient dégagés de l'ouverture correspondante de la caisse mise en volume, et aptes à déplacer verticalement la caisse ainsi mise en volume pour venir coiffer, avec celle-ci, le lot de produits reposant sur la surface de support, les parois latérales de la caisse entourant alors latéralement le lot de produits et les rabats de fond étant pliés vers l'extérieur et sensiblement à l'horizontale, et par le fait que les premiers moyens de pliage comprennent :
- au moins un volet monté en travers d'une ouverture de montage ménagée dans une partie de montage plane et horizontale d'une plaque fixe adjacente à la surface de support, l'au moins un volet étant monté pivotant autour d'un axe de pivotement de façon à être apte à être incliné par rapport à la partie de montage de manière sélective dans une première position de réception, dans laquelle un bord, dit mobile, de l'au moins un volet, parallèle à l'axe de pivotement, se situe au-dessus du plan horizontal de la partie de montage, créant ainsi une fente verticale qui se situe au-dessus de la partie de montage et qui débouche dans l'ouverture de montage, fente verticale par laquelle un premier rabat de fond peut être introduit dans l'ouverture de montage et sous l'au moins un volet, et dans une seconde position de pliage, dans laquelle ledit bord mobile se situe au-dessous du plan horizontal de la plaque fixe, ledit bord mobile étant par ailleurs à distance du bord immédiatement voisin de l'ouverture de montage, de telle sorte qu'est présent entre ces deux un intervalle horizontal par lequel un premier rabat de fond peut passer ; et
- des moyens de déplacement aptes à déplacer la caisse, coiffant le lot de produits, dans une direction de translation perpendiculaire à l'axe de pivotement de l'au moins un volet, de façon à permettre le pliage en position fermée de chaque premier rabat de fond par un premier déplacement de la caisse en direction de l'axe de pivotement de l'au moins un volet, avec ce dernier dans la première position de réception, jusqu'à placer la caisse dans une position dite de préparation, dans laquelle le premier rabat de fond se trouve sous l'au moins un volet et la paroi latérale respective de la caisse se situe au-dessus de l'intervalle horizontal, puis, après que l'au moins un volet a été pivoté de la première position de réception à la seconde position de pliage, par un second déplacement de la caisse dans la même direction jusqu'à ce que la caisse passe au-delà de l'au moins un volet, ce par quoi le premier rabat de fond est plié en position fermée.

De préférence, les premiers moyens de pliage comprennent des premier et second volets chacun dédiés au pliage en position fermée de l'un respectif des deux premiers rabats de fond, l'axe de pivotement de chaque volet se situe dans la région du bord du volet qui est opposé au bord mobile du volet, chaque volet comprenant ainsi un unique bord mobile.

Selon un premier mode de réalisation particulier, les axes de pivotement des deux volets forment un angle, notamment sont perpendiculaires, et les moyens de déplacement comprennent en outre une plateforme rotative montée sur la plaque fixe, interposée entre les deux volets et apte à tourner autour d'un axe vertical, chaque volet étant en regard de la plateforme rotative et cette dernière étant apte à recevoir la caisse, coiffant le lot de produits et avec un premier rabat de fond placé en position fermée par le premier volet, puis à faire tourner la caisse pour placer l'autre premier rabat de fond devant le bord mobile du second volet.

Les moyens de déplacement peuvent comprendre des premier et second bras qui sont chacun montés mobiles en translation sur respectivement des premier et second rails, le premier rail étant perpendiculaire à l'axe de pivotement du premier volet et s'étendant latéralement au support d'entrée et à la plaque fixe, côté opposé à celui où se situe le second volet, de telle sorte que le premier bras est apte à pousser la caisse, coiffant le lot de produits, du support d'entrée jusqu'à la plateforme rotative, le second rail étant perpendiculaire à l'axe de pivotement du second volet et s'étendant latéralement à la plaque fixe, côté opposé à celui où se situe le premier volet, de telle sorte que le second bras est apte à pousser la caisse de la plateforme rotative jusqu'au-delà du second volet.

Selon un second mode de réalisation particulier, les deux volets sont placés l'un à la suite de l'autre avec leurs axes de pivotement parallèles entre eux et leurs bords mobiles à l'opposé l'un de l'autre, et les moyens de déplacement sont aptes à déplacer la caisse, coiffant le lot de produits, dans une première direction de translation d'un côté du premier volet jusqu'au-delà du second volet, déplacement au cours duquel le premier rabat de fond est plié en position fermé par le premier volet, puis à déplacer la caisse dans une seconde direction de translation, opposée à la première direction, jusqu'au moins au-delà du second volet, déplacement au cours duquel l'autre premier rabat de fond est plié en position fermé par le second volet.

Les moyens de déplacement peuvent comprendre des premier et second bras qui sont chacun montés mobiles en translation sur un rail perpendiculaire aux axes de pivotement des volets et s'étendant latéralement au support d'entrée et à la plaque fixe, de telle sorte que le premier bras est apte à pousser dans la première direction de translation la caisse, coiffant le lot de produits, du support d'entrée jusqu'au-delà du second volet, et le second bras est apte à pousser dans la seconde direction de translation la caisse jusqu'au moins au-delà du second volet, les premier et second bras étant soit montés sur un rail commun, soit montés chacun sur un rail respectif avec les rails situés de part et d'autre de la plaque fixe.

Les moyens de déplacement pour les premier et second modes de réalisation décrits ci-dessus peuvent en variante comprend au moins un bras robotique apte à déplacer la caisse dans toutes les directions.

En variante, les premiers moyens de pliage peuvent comprendre un seul volet, les moyens de déplacement étant en outre aptes à déplacer au besoin la caisse, après fermeture d'un premier rabat de fond, pour placer la caisse en regard du bord mobile du volet dans la première position de réception et orientée avec l'autre premier rabat de fond devant ledit bord mobile.

L'axe de pivotement du volet des premiers moyens de pliage peut se situer dans la région du bord du volet qui est opposé au bord mobile du volet, le volet comprenant ainsi un unique bord mobile.

L'axe de pivotement du volet des premiers moyens de pliage peut en variante coïncider avec l'axe central du volet, de telle sorte que chacun des deux bords du volet parallèles à l'axe de pivotement sont des bords mobiles.

On pourra imaginer un grand nombre de manières différentes de mettre en œuvre les moyens de déplacement dans le mode de réalisation défini ci-dessus.

On peut toutefois mentionner, par exemple, des moyens de déplacement analogue à ceux décrits en liaison avec les premier et second modes de réalisation. Par exemple, les moyens de déplacement peuvent comprendre un bras déplaçable en translation le long d'un rail qui est perpendiculaire à l'axe de pivotement du volet et situé latéralement au support d'entrée et à la plaque fixe, le bras étant ainsi apte à pousser la caisse et les produits coiffés du support d'entrée dans une première direction jusqu'au-delà du volet, déplacement au cours duquel un premier rabat de fond est plié en position fermée. La caisse peut alors, par exemple, être reçue sur une plateforme rotative montée dans la plaque fixe, apte à tourner autour d'un axe vertical et servant ici à faire tourner de 180° la caisse. Les moyens de déplacement pourraient comprendre un second bras analogue à celui décrit ci-dessus, mais déplaçable en translation dans la direction opposée, pour ramener la caisse devant le volet avant de déplacer de nouveau la caisse dans la première direction pour fermeture de l'autre premier rabat de fond dans le cas où le volet ne comprend qu'un seul bord mobile, ou bien pour déplacer la caisse au-delà du volet avec fermeture de l'autre premier rabat de fond dans le cas où le volet comprend deux bords mobiles et peut donc être utilisés dans les deux sens. Il serait aussi possible de ne prévoir qu'un seul bras, déplaçable dans les deux sens et montés pivotant autour d'un axe de pivotement parallèle au rail de façon à pouvoir être relevé à la verticale, ce qui permet de le placer d'un côté ou de l'autre de la caisse, en fonction de la direction requise pour la poussée.

On pourrait également, comme indiqué ci-dessus, utiliser comme moyens de déplacement au moins un bras robotique apte à déplacer la caisse dans toutes les directions.

De préférence, les moyens de préhension comprennent un bras robotique portant un outil de préhension qui comprend un corps principal, destiné à venir en contact avec l'une des parois latérales de la caisse, et au moins une partie latérale sur un côté du corps principal, de préférence deux parties latérales l'une de chaque côté du corps principal, la ou chacune de l'au moins une partie latérale étant destinée à être en contact, au moins une fois les parois latérales de la caisse mises en volume, avec l'une respective des deux parois latérales adjacentes à la paroi latérale en contact avec le corps principal, le corps principal et l'au moins une partie latérale étant à cet effet munis d'organes de préhension pour saisir la caisse, les organes de préhension dont est muni le corps principal définissant un premier plan théorique de contact avec la caisse tandis que les organes de préhension dont est munie l'au moins une partie latérale définissent un second plan théorique de contact qui est, une fois les parois latérales de la caisse mises en volume, perpendiculaire audit premier plan théorique de contact, l'outil de préhension comprenant en outre, s'étendant à partir de chacun du corps principal et de l'au moins une partie latérale, une partie secondaire de préhension qui est destinée à venir en regard d'un rabat de fond et qui comprend des organes de préhension aptes à venir en contact et saisir ledit rabat de fond, les organes de préhension de chaque partie secondaire de préhension étant par ailleurs aptes à pivoter autour d'un axe de pivotement perpendiculaire audit second plan théorique de contact dans le cas de la partie secondaire de préhension s'étendant à partir du corps principal et autour d'un axe de pivotement perpendiculaire audit premier plan théorique de contact dans le cas d'une partie secondaire de préhension s'étendant à partir d'une partie latérale, et, de préférence, chaque axe de pivotement appartenant également à un plan respectif qui passe par la ligne de pliage entre ledit rabat de fond correspondant et la paroi latérale respective de la caisse, de telle sorte que chaque partie secondaire de préhension est apte à plier vers l'extérieur le rabat de fond correspondant pour qu'il soit dégagé de l'ouverture de la caisse mise en volume.

Une telle configuration des moyens de préhension permet d'utiliser ces derniers pour l'extraction d'un flan hors d'un magasin de flans, notamment pliés à plat et empilés, la mise en volume de la caisse avec dépliement des rabats de fond vers l'extérieur, et le coiffage du lot de produits.

On note qu'un ou deux rabats de fond peuvent rester libre, en d'autres termes non en contact direct avec l'outil de préhension. Dans le cas où deux rabats de fond sont libres, il sera nécessaire d'en plier au moins un vers l'extérieur, et l'on pourrait par exemple utiliser l'élément de butée qui sera décrit ci-après avec le mouvement adéquat du bras robotique, ou alors incliner légèrement l'outil comme discuté ci-après. Le rabat de fond libre restant pourrait par exemple rester en bordure du support d'entrée. Dans le cas où un seul rabat de fond est libre, on pourrait soit le laisser en bordure du support d'entrée, soit incliner légèrement l'outil de préhension, qui pourrait à cet effet être avantageusement articulé au bras robotique, de façon à débuter le coiffage du lot de produits avec la caisse à la fois légèrement inclinée et venant depuis le côté du lot de produits, avant de redresser la caisse et de poursuivre le déplacement vertical, afin d'éviter que le rabat de fond libre, qui est resté vertical, n'interfère avec les produits.

Cependant, de préférence, la machine comprend en outre un élément de butée qui se situe, en utilisation, au-dessus de la surface de support du support d'entrée et latéralement au lot de produits à encaisser, l'élément de butée définissant à une partie supérieure de celui-ci une butée contre laquelle l'outil de préhension est apte, une fois la caisse mise en volume, à venir faire appuyer le rabat de fond libre, opposé à celui saisi par la partie secondaire de préhension s'étendant à partir du corps principal de l'outil de préhension, de façon à plier le rabat de fond libre vers l'extérieur au début du déplacement vertical vers le bas de la caisse pour le coiffage du lot de produits. Ceci permet d'éviter à l'outil de préhension d'effectuer des mouvements complexes pour l'opération de coiffage.

Selon un mode de réalisation particulier, les seconds moyens de pliage, pour plier les seconds rabats de fond en position fermée, sont placés en aval des premiers moyens de pliage et comprennent :
- une bande longitudinale de tôle dont la direction longitudinale est parallèle à la direction de déplacement de la caisse le long des seconds moyens de pliage, la bande s'étendant en travers d'une ouverture définissant de chaque côté de la bande un espace libre, la bande étant apte à supporter la caisse avec les premiers rabats de fond en position fermée, les deux espaces libres permettant aux deux seconds rabats de fond de venir à la verticale sous l'effet de leur propre poids ;
- un dispositif de pliage situé sous ladite bande et apte à plier les deux seconds rabats de fond de leur position à la verticale à la position fermée, où ils se situent contre la face inférieure de ladite bande ;
- un plateau situé en aval de ladite ouverture et du dispositif de pliage, à une hauteur inférieure à celle de la bande, et apte à supporter les seconds rabats de fond après que ceux-ci ont été pliés en position fermée par le dispositif de pliage ; et
- des moyens de déplacement de la caisse le long de ladite bande puis, après pliage des seconds rabats de fond, jusqu'audit plateau.

On souligne ici que les moyens de préhension décrits ci-dessus, qui permettent une mise en volume des parois latérales d'une caisse de type américaine ainsi que le pliement des rabats de fond vers l'extérieur et le haut, pourraient être utilisés pour le coiffage de produits, avec des moyens de fermeture des rabats de fond qui soient différents de ceux décrits ci-dessus.

Sont ainsi également divulgués des moyens de préhension de caisse aptes à déplacer dans l'espace une caisse de type caisse américaine, la caisse comprenant ainsi deux premières parois latérales opposées et deux secondes parois latérales opposées, les premières parois latérales étant prolongées chacune aux deux extrémités par un premier rabat tandis que les secondes parois latérales sont prolongées chacune aux deux extrémités par un second rabat, caractérisés par le fait que les moyens de préhension sont en outre aptes à plier vers l'extérieur au moins trois des premiers et seconds rabats de fond, destinés à constituer le fond de la caisse, de façon à ce qu'ils soient dégagés de l'ouverture correspondante de la caisse mise en volume, et aptes à déplacer verticalement la caisse ainsi mise en volume pour venir coiffer, avec celle-ci, des produits reposant sur une surface de support.

Ces moyens de préhension peuvent être avantageusement mis en œuvre de la manière décrite ci-dessus en liaison avec la machine d'encaissage selon la présente invention.

Pour mieux illustrer l'objet de la présente invention, on va en décrire ci-après, à titre illustratif et non limitatif, des modes de réalisation particuliers, avec référence aux dessins annexés.

Sur ces dessins :
[Fig. 1] est une vue en perspective de dessus d'une machine selon un premier mode de réalisation particulier de la présente invention, avant l'étape de coiffage d'un lot de produits reposant sur le support d'entrée.
[Fig. 2] est une vue en perspective de dessus de la machine de la Figure 1, une fois l'étape de coiffage terminée.
[Fig. 3] est une vue en perspective de dessus de la machine de la Figure 1, dans une première phase de l'étape de pliage d'un premier rabat de fond.
[Fig. 4] est une vue en perspective de dessus de la machine de la Figure 1, dans une deuxième phase de l'étape de pliage du premier rabat de fond, la caisse se trouvant dans la position de préparation.
[Fig. 5] est une vue en perspective de dessus de la machine de la Figure 1, dans une troisième phase de l'étape de pliage du premier rabat de fond, après pivotement du premier volet dans la seconde position de pliage, le support d'entrée et les moyens de préhension ayant été omis de la Figure 5.
[Fig. 6] est une vue analogue à la Figure 5, après la première phase de l'étape de pliage de l'autre premier rabat de fond.
[Fig. 7] est une vue analogue à la Figure 5, dans une deuxième phase de l'étape de pliage de l'autre premier rabat de fond, la caisse se trouvant dans la position de préparation.
[Fig. 8] est une vue analogue à la Figure 5, dans une troisième phase de l'étape de pliage de l'autre premier rabat de fond, après pivotement du second volet dans la seconde position de pliage.
[Fig. 9] est une vue en perspective de dessus de la machine de la Figure 1, avant l'étape de pliage des seconds rabats de fond, le support d'entrée et les moyens de préhension ayant été omis de la Figure 9.
[Fig. 10] est une vue en perspective de dessous de la machine de la Figure 1, avant l'étape de pliage des seconds rabats de fond, le support d'entrée et les moyens de préhension ayant été omis de la Figure 10.
[Fig. 11] est une vue en perspective des seconds moyens de pliage et d'une caisse avant l'étape de pliage des seconds rabats de fond.
[Fig. 12] est une vue analogue à la Figure 11, après pliage des seconds rabats de fond par les seconds moyens de pliage.
[Fig. 13] est une vue en perspective de dessus d'une partie **d'une** machine selon un second mode de réalisation particulier de la présente invention, avant l'étape de coiffage d'un lot de produits reposant sur le support d'entrée, seuls le support d'entrée et les moyens de préhension ayant été représentés.
[Fig. 14] est une vue en perspective de dessus de la machine dont une partie est illustrée sur la Figure 13, une fois l'étape de coiffage terminée.
[Fig. 15] est une vue en perspective de dessus de la machine selon le second mode de réalisation, montrant le support d'entrée et les premiers moyens de pliage, avant pliage des premiers rabats de fond.
[Fig. 16] est une vue en perspective de dessus des moyens de préhension selon un mode de réalisation particulier de la présente invention, lors de la saisie d'un flan de carton.
[Fig. 17] est une vue en perspective de l'outil de préhension des moyens de préhension représentés sur la Figure 16, après mise en volume des parois latérales de la caisse et avant pliage vers l'extérieur de trois rabats de fond.

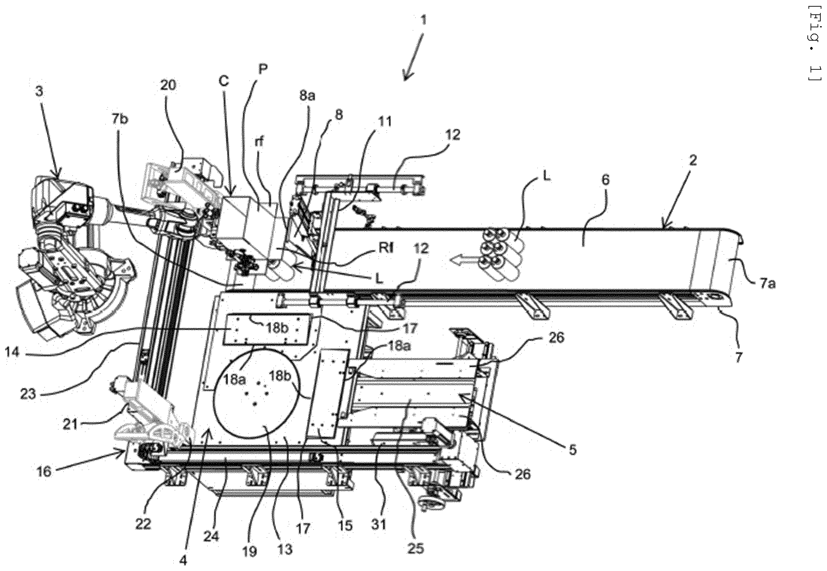

Si l'on se réfère tout d'abord aux Figures 1 à 12, on peut voir que l'on y a représenté une machine 1 d'encaissage de produits dans une caisse C de type « caisse américaine » selon un premier mode de réalisation particulier de la présente invention.

La machine 1 comprend un support d'entrée 2, des moyens de préhension 3 servant à coiffer, avec la caisse C mise en volume de manière adéquate, un lot L de produits reposant sur le support d'entrée 2, des premiers moyens de pliage 4 et des seconds moyens de pliage 5 servant à plier en position fermée les premiers et seconds rabats de fond, respectivement.

De manière classique, la caisse C est une caisse, ici de section longitudinale rectangulaire, mais qui pourrait être carrée, comprenant quatre parois latérales P prolongées chacune aux deux extrémités par un rabat. La caisse C comprend ainsi quatre rabats destinés à constituer le fond de la caisse, désignés dans la présente demande par rabats de fond, à savoir deux premiers rabats de fond rf et deux seconds rabats de fond Rf, désignés ci-après par petits rabats de fond rf et grands rabats de fond rf.

Le support d'entrée 2 présente une surface de support 6 qui est plane et horizontale de façon à pouvoir supporter un lot L de produits. Dans les modes de réalisation, le support d'entrée 2 est un convoyeur 7 à bande classique, dont la bande constitue la surface de support 6. Les produits sont regroupés en un lot L dans une première région d'extrémité 7a du convoyeur 7, puis avancés jusqu'à la seconde région d'extrémité 7b du convoyeur 7 où le lot L sera coiffé avec la caisse C. On souligne ici que la présente invention n'est pas limitée à une manière spécifique de placer les produits en un lot et l'on pourra utiliser tout moyen adéquat, bien connu dans la technique.

Dans le premier mode de réalisation représenté sur la Figure 1, les moyens permettant le coiffage du lot L comprennent les moyens de préhension 3 et un élément de butée 8.

Les moyens de préhension 3 comprennent un bras robotique 9 et un outil de préhension 10, porté par le bras robotique 9 dont une description détaillée sera fournie plus loin.

Le bras robotique 9 est ici un bras articulé classique permettant de déplacer l'outil de préhension 10 dans les trois dimensions de l'espace. En particulier, le bras robotique 9 est disposé de façon à pouvoir atteindre à la fois un magasin d'alimentation dans lequel sont stockés à plat des flans pliés et à partir de chacun desquels une caisse peut être obtenue, et la seconde région d'extrémité du convoyeur 7 où se situe le lot L de produit à coiffer. Le bras robotique 9 est ici disposé dans le prolongement du convoyeur 7, mais il pourrait être disposé à un autre emplacement.

L'outil de préhension 10 est apte, à partir d'un flan saisi dans le magasin d'alimentation, à mettre en volume les parois latérales P de la caisse C et à plier vers l'extérieur trois rabats de fond de façon à ce qu'ils soient dégagés de l'ouverture inférieure de la caisse C mise en volume, comme on peut le voir sur la Figure **1****.**

L'élément de butée 8 est lui-aussi déplaçable dans l'espace de façon à pouvoir être placé à côté du lot L de produits, après que celui-ci a été placé dans sa position pour le coiffage, une partie supérieure 8a de l'élément de butée 8 se trouvant alors à une hauteur supérieure à celle des produits du lot **L.**

L'élément de butée 8 se présente ici sous la forme d'une plaque verticale portée par la tige mobile d'un actionneur linéaire de type vérin dont la direction de translation est au moins légèrement inclinée par rapport à la verticale, le corps de l'actionneur linéaire étant porté par une traverse 11 s'étendant au-dessus du convoyeur 7, transversalement à la direction de déplacement de la bande de ce dernier, et dont les deux extrémités sont montées sur deux tiges de guidage 12 parallèles le long desquelles la traverse 7 est déplaçable en translation.

Les premiers moyens de pliage 4 comprennent une plaque fixe 13, des premier et second volets 14, 15, et des moyens de déplacement 16.

La plaque fixe 13 est une plaque plane rectangulaire portée par des pieds et à la même hauteur que et adjacente, au niveau d'un premier de ses côtés, à la surface de support 6 dans la seconde région d'extrémité du convoyeur 7, de telle sorte que le lot L de produits, coiffé de la caisse C, peut passer du support d'entrée 2 à la plaque fixe 13 par translation tout en conservant un support des produits, par la surface de support 6 puis par la surface supérieure de plaque fixe 13.

Chaque volet 14, 15 se présente sous la forme d'une plaque plane rectangulaire monté pivotant dans une ouverture de montage 17, rectangulaire, ménagée à travers toute l'épaisseur de la plaque fixe 13. L'axe de pivotement de chaque volet 14, 15 est parallèle à la direction longitudinale du volet 14, 15 et se situe à ou au voisinage d'un bord long 18a du volet 14, 15. Chaque volet 14, 15 peut être pivoté entre une première position, dite de réception, dans laquelle le volet 14, 15 est incliné et son autre bord long, dit bord mobile 18b, opposé au bord long 18a, se situe au-dessus du plan horizontal de la plaque fixe 13, et une seconde position, dite de pliage, dans laquelle le bord mobile 18b se situe au-dessous du plan horizontal de la plaque fixe 13.

Dans la position de réception, l'angle d'inclinaison du volet 14, 15 par rapport au plan horizontal de la plaque fixe 13 est tel que le bord mobile 18b crée, au-dessus de la plaque fixe 13, une fente verticale qui débouche dans l'ouverture de montage 17 et dont la hauteur est supérieure à l'épaisseur d'un petit rabat de fond rf, de sorte que ce dernier peut être introduit dans l'ouverture de montage 17 et sous le volet 14, 15 en passant par la fente verticale. De préférence, le volet 14, 15 est également incliné d'un angle au moins égal à cet angle minimal défini ci-dessus.

De plus, la largeur de chaque volet 14, 15 est au moins légèrement inférieure à la largeur de l'ouverture de montage 17, d'au moins la valeur de l'épaisseur d'un petit rabat de fond rf. On comprend aisément qu'un intervalle horizontal, par laquelle un petit rabat de fond rf peut s'étendre, sera ainsi toujours présent entre le bord mobile 18b et le bord immédiatement voisin de l'ouverture de montage 17, quelle que soit l'inclinaison du volet 14, 15 par rapport à la plaque fixe 13.

Le premier volet 14 se situe dans la région du premier côté de la plaque fixe 13 adjacent au support d'entrée 2 et son axe de pivotement est parallèle audit premier côté. Le bord mobile 18b du premier volet 14 est plus proche du premier côté de la plaque fixe 13 que le bord 18a. Ainsi, en position de réception, le premier volet 14 crée une fente verticale qui est en regard de l'emplacement où se situe le lot L de produits, coiffé de la caisse C.

Le second volet 15 est disposé à 90° du premier volet 14 et décalé de ce dernier dans les directions de largeur et de longueur du premier volet 14. L'axe de pivotement du second volet 15 est donc perpendiculaire à celui du premier volet 14. Le second volet 15 se situe par ailleurs dans la région d'un second côté de la plaque fixe 13 perpendiculaire audit premier côté. Par ailleurs, contrairement au premier volet 14, le bord mobile 18b du second volet 14 est plus éloigné du second côté de la plaque fixe 13 que le premier bord 18a. Ainsi, en position de réception, le second volet 15 crée une fente verticale qui est en regard de la région de la plaque fixe 13 qui se situe après le premier volet 14, lorsque prise dans la direction allant du support d'entrée 2 au premier volet 14, et dans laquelle se situe une plateforme rotative 19 faisant partie des moyens de déplacement 16.

La plateforme rotative 19 est une plateforme circulaire montée sur la plaque fixe 13 de façon à pouvoir tourner autour d'un axe vertical passant par le centre de la plateforme circulaire. Plus spécifiquement, les deux droites qui sont chacune perpendiculaires à la direction longitudinale d'un volet 14, 15 respective et passent par le centre, pris dans la direction longitudinale, du volet 14, 15 respectif, se croisent au centre de la plateforme rotative 19. Comme cela sera explicité ci-après, la plateforme rotative 19 sert, après le pliage d'un premier petit rabat de fond rf, à orienter la caisse C en vue du pliage du second petit rabat de fond rf.

Les moyens de déplacement 16 comprennent en outre des premier et second bras 20, 21 reliés chacun à un chariot 22 monté coulissant en translation le long de premier et second rails 23, 24, respectivement. Chaque bras 20, 21 est en outre aptes à pivoter autour d'un axe de pivotement horizontal parallèle à l'axe longitudinal du rail 23, 24 respectif, de façon à pouvoir être relevé dans une position verticale, dans laquelle il n'interfère pas avec le déplacement des autres éléments de la machine 1 et de la caisse C, et abaisser dans une position abaissée, par exemple à l'horizontale, dans laquelle il s'étend au-dessus du support d'entrée 2 et/ou de la plaque fixe 13 dans une mesure telle qu'il peut venir pousser la caisse C pour la déplacer en translation. La liaison entre chaque bras 20, 21 et le chariot 22 correspondant sera donc une liaison pivot. Le pivotement du bras 20, 21 pourra être commandé par tout moyen connu, comme par exemple par un actionneur linéaire de type vérin, comme illustré sur la Figure 1.

En particulier, le premier rail 23 s'étend latéralement au support d'entrée 2 et à la plaque fixe 13, sur le côté opposé à celui où se situe le second volet 15, et perpendiculairement à l'axe de pivotement du premier volet 14. Le premier rail 23 s'étend sur une longueur telle que la course du premier bras 20, dans la position abaissée, s'effectue entre une première position d'extrémité, dans laquelle le premier bras 20 se situe de l'autre côté du lot L de produits reposant sur le support d'entrée 2 et coiffé de la caisse C, et une seconde position d'extrémité, dans laquelle le premier bras 20 se situe au-delà du premier volet 14 et a poussé la caisse C jusqu'à la plateforme rotative 19.

Le second rail 24 s'étend latéralement à la plaque fixe 13 et aux seconds moyens de pliage 5, sur le côté opposé à celui où se situe le premier volet 14, et perpendiculairement à l'axe de pivotement du second volet 15. Le second rail 24 s'étend sur une longueur telle que la course du second bras 21, dans la position abaissée, s'effectue entre une première position d'extrémité, dans laquelle le second bras 21 se situe sur le côté du lot L de produits reposant sur la plateforme rotative 19, et une seconde position d'extrémité, dans laquelle le second bras 21 se situe à l'extrémité de fin des seconds moyens de pliage 5, jusqu'à laquelle il aura poussé la caisse C.

Les seconds moyens de pliage 5 sont analogues à ceux décrits dans le brevet EP 3 263 469 B1, en ce qu'ils permettent le pliage simultané des deux grands rabats de fond RF par le dessous.

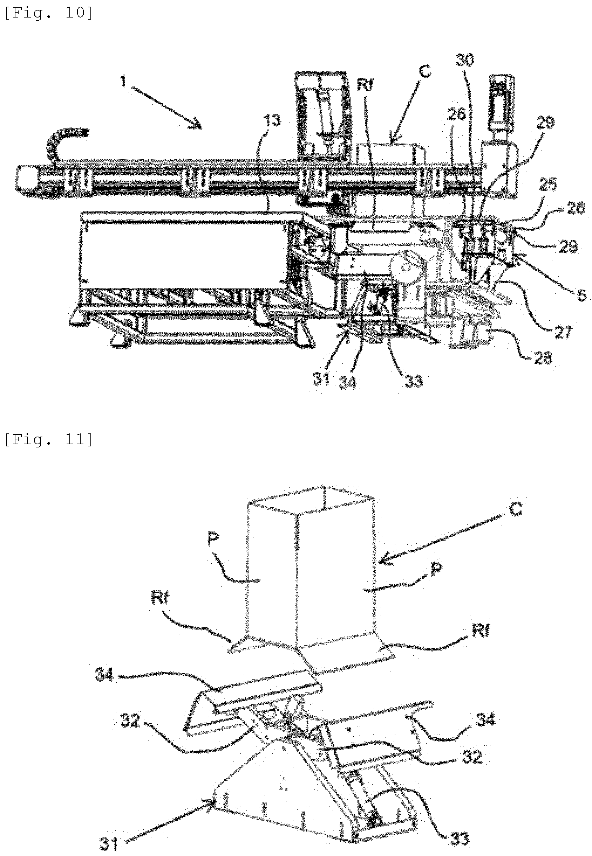

Les seconds moyens de pliage 5 comprennent une bande centrale 25 de tôle, longitudinale, s'étendant à partir du second côté de la plaque fixe 13. L'axe longitudinal de la bande centrale 25 est perpendiculaire à l'axe de pivotement du second volet 15 et passe par le centre de ce dernier, pris dans sa direction longitudinale. De part et d'autre de la bande centrale 25 sont disposées deux bandes latérales 26, à une hauteur supérieure à celle de la bande centrale 25 d'une valeur au moins légèrement supérieure à l'épaisseur des grands rabats de fond Rf. Les bandes 25, 26 sont fixées, au niveau d'une première extrémité, à la plaque fixe 13 et, au niveau d'une seconde extrémité, à des pieds 27, 28, comme on peut mieux le voir sur la Figure 10.

Toujours avec référence à la Figure 10, dans la région de la seconde extrémité des bandes latérales 26 se situent deux plaques inférieures 29, chacune au-dessous d'une bande latérale 26 respective. Ces deux plaques inférieures 29 définissent ainsi un plateau 30 qui servira à supporter à l'horizontale les grands rabats de fond Rf une fois ces derniers repliés contre les petits rabats de fond Rf.

On peut également voir sur la Figure 10 que l'espace à côté et au-dessous de la bande centrale 25 est libre et qu'un dispositif de pliage 31 se situe sous la bande centrale 25. Le dispositif de pliage 31 comprend deux ensembles bras pivotants 32 dont les pivotements sont commandés par des actionneurs 33, tels que des vérins, et dont les extrémités supérieures 34 viendront faire pivoter les deux grands rabats de fond Rf pour les plier vers le haut, contre la surface inférieure de la bande centrale 25.

On a décrit ci-dessus les structures des différents moyens de la machine 1 qui permettent l'encaissage du lot L de produits dans la caisse C sans opérations de préhension des produits. On va maintenant décrire les différentes étapes du procédé d'encaissage mis en œuvre par la machine 1.

La Figure 1 montre la machine 1 avant l'étape de coiffage du lot L de produits. Les moyens de préhension 3 ont saisi un flan dans le magasin d'alimentation, ont mis en volume la caisse C et ont relevé deux petits rabats de fond rf et un premier grand rabat de fond Rf. Le second grand rabat de fond Rf est relevé par abaissement vertical de la caisse C, par le bras robotique 9, par rapport à l'élément de butée 8 qui aura été placé sur le côté du lot L de produits et dont la partie supérieure 8a se situe au-dessus des produits. On comprendra aisément que, l'élément de butée 8 étant maintenu immobile, cet abaissement vertical de la caisse C amène le second grand rabat de fond Rf à venir appuyer sur la partie supérieure 8a de l'élément de butée 8 et à ainsi être relevé par cette dernière, l'élément de butée 8 étant ensuite déplacé dans une position escamotée, dans laquelle il autorise le lot L de produits à avancer jusqu'à la seconde région d'extrémité du convoyeur 7.

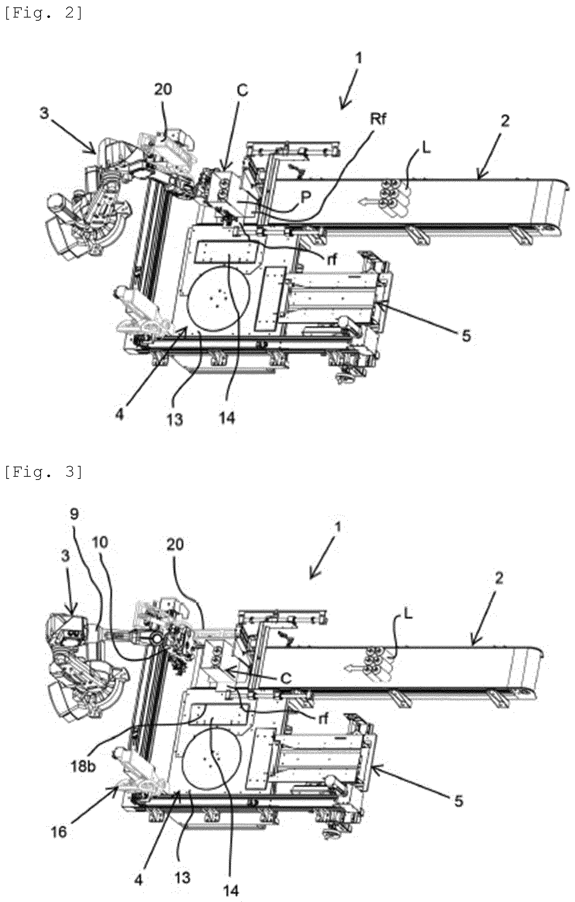

La Figure 2 montre la caisse C coiffant le lot L de produits. La caisse C repose sur la surface de support 6, les parois latérales P de la caisse C entourent le lot L de produits, les rabats de fond rf, Rf sont sensiblement horizontaux, et un petit rabat de fond rf est en face du premier volet 14.

La Figure 3 montre la première phase de l'étape de pliage d'un premier petit rabat de fond rf. Le premier bras 20 a été pivoté dans la position abaissée et se situe derrière la caisse C, sur le côté opposé à celui en regard des premiers moyens de pliage **4.** L'outil de préhension 10 a relâché la caisse C et le bras robotique 9 a été déplacé pour que l'outil de préhension 10 soit dégagé du trajet de la caisse C. Le premier volet 14 a été commandé pour se trouver dans la position de réception.

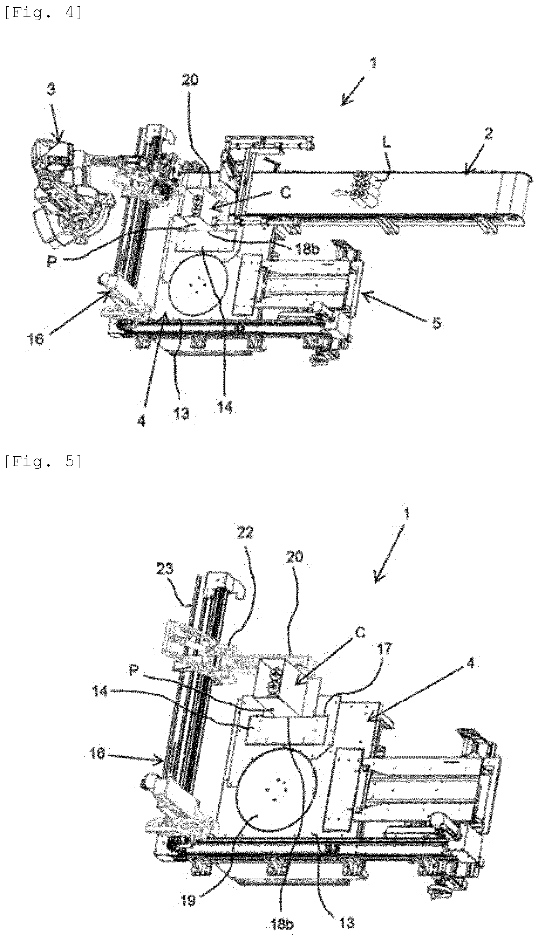

Le premier bras 20 est ensuite déplacé en translation pour pousser la caisse C vers le premier volet 14 et amener le premier petit rabat de fond rf à entrer dans l'ouverture de montage 17 du premier volet 14 en passant par la fente verticale respective, jusqu'à placer la caisse C dans une position de préparation, comme représenté sur la Figure 4. Dans la position de préparation, le petit rabat de fond rf s'étend sous le premier volet 14, dans l'ouverture de montage 17, et la paroi latérale P respective de la caisse C est au niveau de l'intervalle horizontal présent entre le bord mobile 18b et le bord correspondant de l'ouverture de montage 17.

Le premier volet 14 est alors amené à pivoter de la position de réception à la position de pliage, comme représenté sur la Figure **5****.** Ce pivotement du premier volet 14 ramène sensiblement à la verticale le premier petit rabat de fond rf, qui s'étend ainsi dans ledit intervalle horizontal.

Le premier bras 20 est ensuite déplacé en translation pour déplacer la caisse C au-delà du premier volet 14, alors que ce dernier est maintenu dans la position de pliage, ou à tout le moins incliné vers le bas. Ainsi, au fur et à mesure que la caisse C avance vers le bord 18a du premier volet 14 et dépasse ce dernier, le premier petit rabat de fond rf est plié vers le haut par le bord mobile 18b du premier volet 14, jusqu'à être plié en position fermé, sous le lot L de produits.

Le premier petit rabat de fond rf a ainsi été plié en position fermée, depuis le dessous, sans que les produits ne perdent leur support, d'abord par la surface de support 6, puis par la plaque fixe 13 et le premier volet 14.

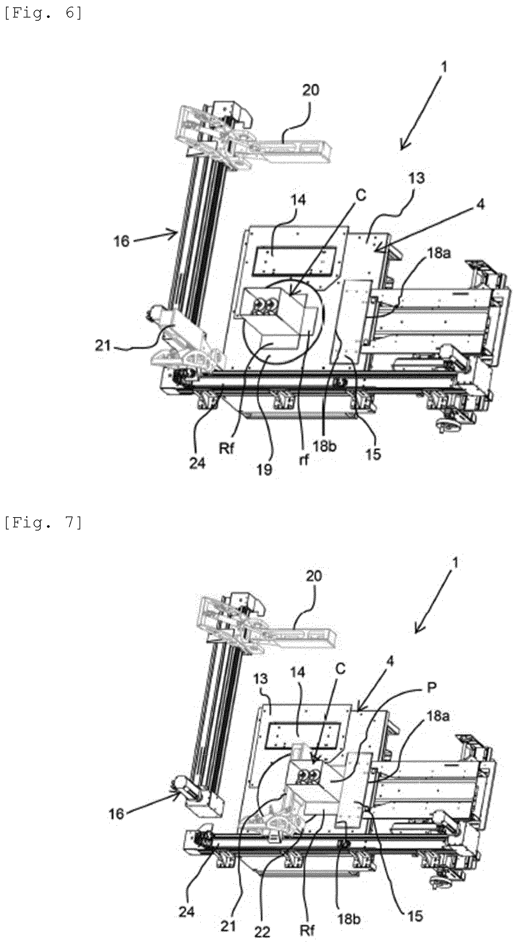

Le premier bras 20 pousse la caisse C jusqu'à la placer sur la plateforme rotative 19, avec la caisse C centrée sur cette dernière. Le premier bras 20 est alors ramené à sa position initiale et la plateforme rotative 19 est tournée de 90° pour placer le second petit rabat de fond rf devant le second volet 15, comme représenté sur la Figure 6.

Le second bras 21 est ensuite pivoté dans la position abaissé et déplacé pour pousser la caisse C jusqu'à la position de préparation par rapport au second volet 15, analogue à celle décrite pour le premier volet 14, comme représenté sur la Figure 7.

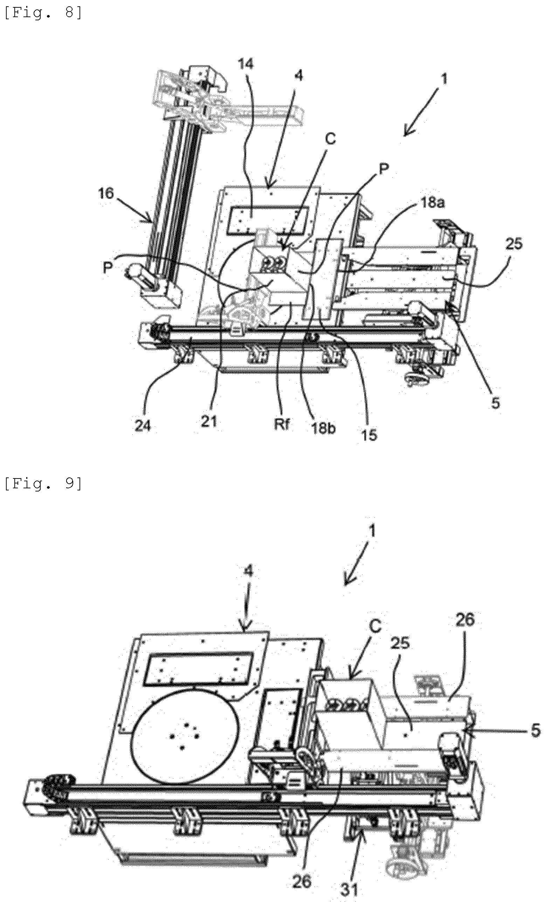

Le second volet 15 est alors pivoté vers la position de pliage, comme représenté sur la Figure 8, puis le second bras 21 pousse la caisse C au-delà du second volet 15, pliant ainsi le second petit rabat de fond rf en position fermée, jusqu'à placer la caisse C sur les seconds moyens de pliage 5, où les petits rabats de fond rf reposent sur la bande centrale 25 qui les maintient donc en position fermée, comme représenté sur la Figure 9.

A ce stade, comme on peut mieux le voir sur la Figure 10, les grands rabats de fond Rf reviennent à la verticale, ce qui ne leur était pas possible du fait du support d'entrée 2 et de la plaque fixe 13. Le dispositif de pliage 31 est alors en position ouverte, dans laquelle les extrémités supérieurs 34 des ensembles bras pivotants 32 se situent sous les grands rabats de fond Rf et décalées latéralement par rapport à ces derniers, comme on peut mieux le voir sur la Figure 11.

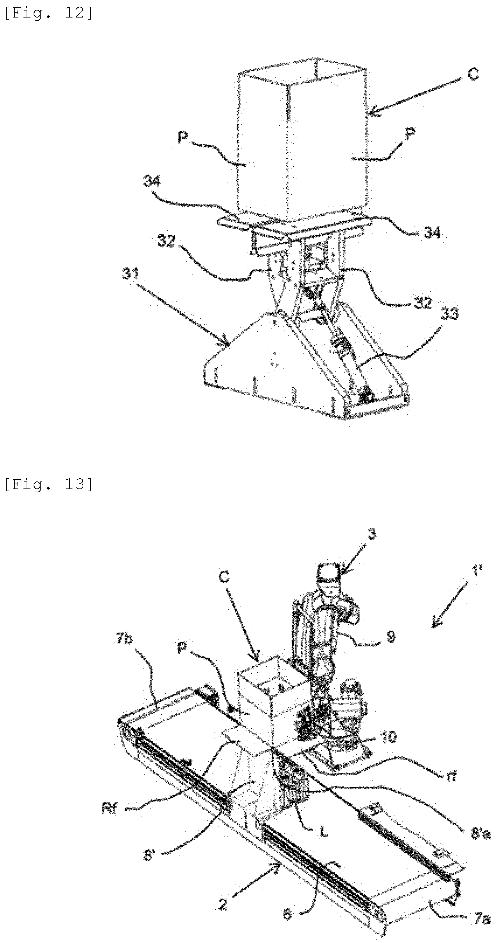

Le dispositif de pliage 31 est ensuite actionné pour faire pivoter les ensembles bras pivotants 32 vers le haut, et ainsi plier vers le haut les deux grands rabats de fond Rf jusqu'à la position fermée, comme représenté sur la Figure 12.

Les grands rabats de fond Rf sont alors contre la face inférieure de la bande centrale 25, tandis que les petits rabats de fond rf reposent sur la face supérieure de la bande centrale 25. Le second bras 21 est alors déplacé pour pousser la caisse C jusqu'à l'extrémité des bandes latérales 26, où les grands rabats de fond Rf viennent se placer entre les bandes latérales 26 et le plateau 30 formé par les plaques inférieures 29.

Le fond de la caisse C a alors été constitué, avec le lot L de produits encaissé, sans opérations de préhension des produits.

De là, la caisse C avec son fond constitué peut être amené à des moyens de solidarisation du fond, comme par exemple une scotcheuse ou une encolleuse, et de fermeture des rabats supérieurs de la caisse, ces moyens étant connus en soi et ne faisant pas partie de la présente invention.

La machine 1 selon le premier mode de réalisation représenté sur les Figures 1 à 12 a une configuration en U, en ce sens que la direction de déplacement en entrée, sur le support d'entrée 2, et la direction de déplacement en sortie, sur les seconds moyens de pliage 5, sont parallèles mais opposées.

Si l'on se réfère maintenant aux Figures 13 à 15, on peut voir que l'on y a représenté une machine 1' selon un second mode de réalisation, dans lequel la configuration est rectiligne.

Comme on peut le voir sur la Figure 13, l'élément de butée 8' sera déplaçable latéralement au convoyeur 7. L'opération de coiffage reste la même, le bras robotique 9 abaissant la caisse C mise en volume jusqu'à venir coiffer le lot L de produits, l'élément de butée 8' relevant le quatrième rabat de fond non relevé directement par l'outil de préhension 10.

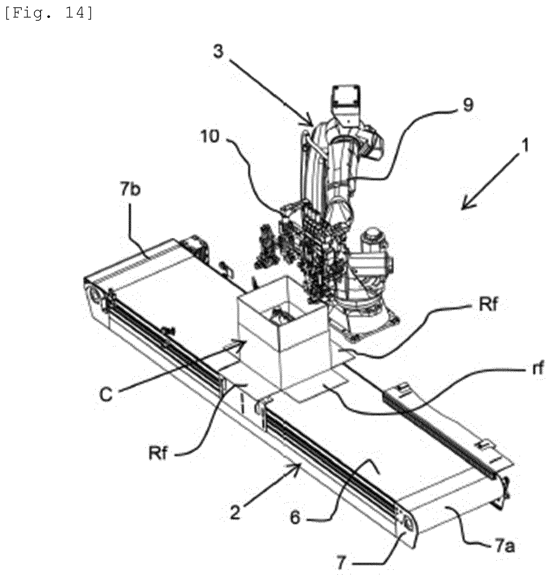

Une fois l'opération de coiffage achevée, l'outil de préhension 10 est dégagé de la caisse C, comme représenté sur la Figure 14.

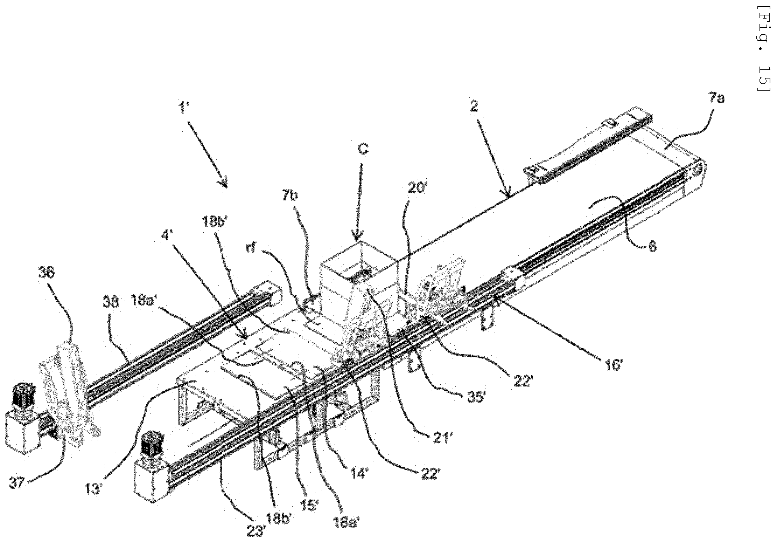

La caisse C peut alors être déplacée vers les premiers moyens de pliage 4', comme représenté sur la Figure 15. Les premiers moyens de pliage 4' comprennent une plaque fixe 13', des premier et second volets 14', 15', et des moyens de déplacement 16'.

La plaque fixe 13' est placée dans le prolongement de la seconde région 7b du convoyeur 7, plutôt que sur un côté de celui-ci comme dans le premier mode de réalisation.

Les premier et second volets 14', 15' sont similaires aux premier et second volets 14, 15 du premier mode de réalisation et fonctionnent de la même manière. Cependant, les premier et second volets 14', 15' sont placés l'un à la suite de l'autre, avec leurs axes de pivotement parallèles entre eux. Ils sont également disposés de façon à s'ouvrir dans deux directions opposées. En d'autres termes, leurs bords 18a' sont les plus proches, tandis que leurs bords mobiles 18b' sont les plus éloignés. Le premier volet 14' est disposé de façon à créer, en position de réception, une fente verticale qui est en regard de la seconde extrémité 7b du convoyeur 7, donc du support d'entrée 2. Aucune plateforme rotative n'est prévue.

Les moyens de déplacement 16' comprennent des premier et second bras 20', 21', qui sont chacun reliés à un chariot 22', les deux chariots 22' étant montés coulissant en translation le long d'un rail commun 23'. Comme dans le premier mode de réalisation, les premier et second bras 20', 21' sont en outre aptes à pivoter entre les positions relevée et abaissée. Cependant, les chariots 22' sont rendus solidaires l'un de l'autre par une tige de liaison 35', de sorte que les bras 20', 21' sont déplaçables d'un seul tenant en translation. Les bras 20', 21' sont également séparés d'une distance au moins légèrement supérieure aux dimensions des caisses C qu'il s'agit d'encaisser.

Le rail commun 23' s'étend latéralement au support d'entrée 2 et à la plaque fixe 13', sur un premier côté de ceux-ci. Le rail commun 23' s'étend sur une longueur telle que le premier bras 20' peut pousser la caisse C du support d'entrée 2 jusqu'au-delà du second volet 15' et que le second bras 21' peut pousser la caisse C d'un emplacement devant le second volet 15' jusqu'au moins au-delà du second volet 15'.

On souligne ici que, dans un but de simplification, les moyens de déplacement 16' ont été omis des Figures 13 et 14.

Ainsi, l'on comprendra aisément que le pliage des petits rabats de fond rf se fait sur le même principe que dans le premier mode de réalisation : la caisse C est placée, par le premier bras 20', dans la position de préparation par rapport au premier volet 14' se trouvant dans la position de réception, le premier volet 14' est pivoté dans la position de pliage, la caisse C est déplacée, toujours par le premier bras 20', jusqu'au-delà du second volet 15', ce qui plie le premier petit rabat de fond rf, la caisse C se trouve alors devant le second volet 15', en position de réception, avec le second petit rabat de fond rf devant le second volet 15', la caisse C est déplacée, par le second bras 21', dans la direction opposée, jusqu'à la position de préparation par rapport au second volet 15', le second volet 15' est pivoté dans la position de pliage et la caisse C est déplacée, toujours par le second bras 21' jusqu'au-delà du second volet 15', ce qui plie le second petit rabat de fond rf. Les premier et second bras 20', 21' se trouvent alors en position relevée.

Les seconds moyens de pliage sont identiques à ceux du premier mode de réalisation et sont placés directement dans le prolongement de la plaque fixe 13'.

Dans le premier mode de réalisation, les seconds moyens de pliage comprennent des moyens de déplacement qui sont formés par une partie des moyens de déplacement 16 des premiers moyens de pliage, à savoir le second bras 21. Toutefois, dans le second mode de réalisation, les seconds moyens de pliage comprennent des moyens de déplacement dédiés comportant un bras 36 identique au premier ou second bras 20', 21', en ce qu'il est relié à un chariot 37 et apte à pivoter entre une position relevée et abaissée, le chariot 37 étant monté coulissant sur un rail 38 s'étendant de l'autre côté de la plaque fixe 13'. Le rail 38 s'étend sur une longueur telle que la course du bras 36 s'effectue entre une première position d'extrémité, dans laquelle le bras 36 se situe sur le côté de la caisse C après que les deux petits rabats de fond rf ont été pliés en position fermée, et une seconde position d'extrémité, dans laquelle le bras 36 a poussé la caisse C jusqu'à l'extrémité des seconds moyens de pliage, où les grands rabats de fond Rf de la caisse C ont été pliés en position fermée.

On constate donc que la présente invention n'est pas limitée à une configuration géométrique particulière des premier et second moyens de pliage.

De plus, la présente invention n'est pas limitée à une manière spécifique pour obtenir le déplacement des différents éléments mobiles, comme les volets et les bras. Par exemple, chaque volet pourra être fixé à un arbre lui-même monté à rotation par rapport à la plaque fixe, et dont la rotation pourra être obtenue par tout moyen approprié, comme par exemple par moteur. Par exemple, les chariots portant les bras pourront être chacun solidaires d'un écrou correspondant bloqué en rotation et entourant une vis sans fin entraînée en rotation par tout moyen approprié, comme par exemple par moteur. La commande des différents déplacements (pivotements des volets, translation des bras, rotation de la plateforme rotative, pliage du dispositif de pliage) pourra être gérée par tout moyen connu, permettant de procéder aux différents déplacements suivant la séquence présentée ci-dessus, comme par exemple un automate programmable industriel, des capteurs pouvant être éventuellement prévus pour connaître les positions des différents éléments mobiles et de la caisse.

Par ailleurs, la présente invention n'est pas limitée à des moyens de préhension spécifiques, pourvu que ces moyens soient aptes à plier vers l'extérieur les rabats de fond de façon à ce qu'ils soient dégagés de l'ouverture correspondante de la caisse mise en volume, et aptes à déplacer verticalement la caisse ainsi mise en volume pour venir coiffer, avec celle-ci, le lot de produits reposant sur la surface de support, les parois latérales de la caisse entourant alors latéralement le lot de produits et les rabats de fond étant pliés vers l'extérieur et sensiblement à l'horizontale.

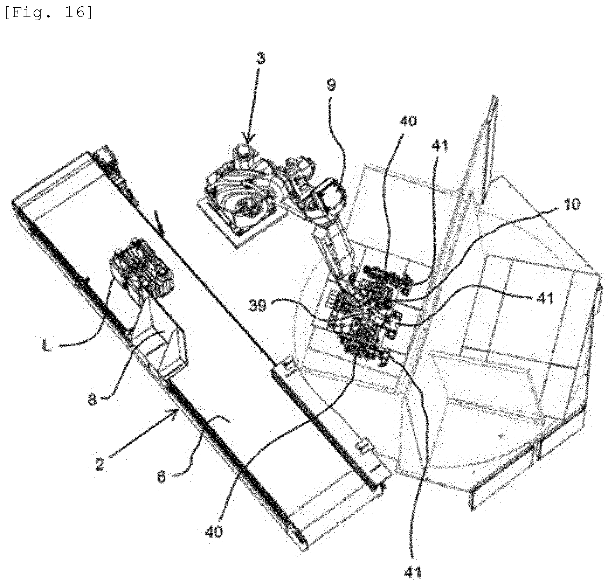

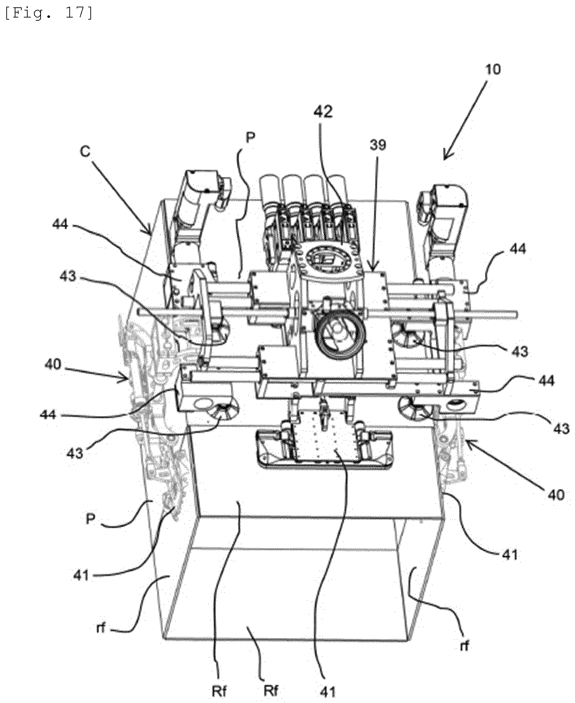

On va maintenant décrire plus en détail un mode de réalisation particulièrement avantageux des moyens de préhension, en particulier de l'outil de préhension 10, avec référence aux Figures 16 et 17.

L'outil de préhension 10 comprend de manière générale un corps principal 39, deux parties latérales 40 et trois parties secondaires de préhension 41.

Le corps principal 39 comprend un raccord 42, par lequel l'outil de préhension 10 est relié à pivotement au bras robotique 9, et quatre organes de préhension 43 situés aux quatre coins d'un rectangle et portés chacun par un bloc 44 faisant partie du corps principal 39. Les organes de préhension 43 sont ici formées par des ventouses qui définissent un premier plan théorique de contact avec la caisse C, en particulier avec une paroi latérale P dans le prolongement de laquelle se situe un grand rabat de fond Rf. Le corps principal 39 est ainsi destiné à venir en contact avec et saisir une telle paroi latérale P d'un flan de carton stocké dans un magasin d'alimentation, comme illustré sur la Figure 16.

Les parties latérales 40 sont reliées à pivotement au corps principal 39, sur deux côtés opposés de celui-ci, et elles comprennent chacune des organes de préhension, notamment des ventouses, qui définissent un second plan théorique de contact avec la caisse C, en particulier avec une paroi latérale P adjacente à celle en contact avec le corps principal 39. Les parties latérales 40 sont agencées de façon à être aptes à pivoter entre une première position, dans laquelle elles sont globalement dans le même plan que le corps principal 39, à savoir que les premier et second plans théoriques de contact coïncident, et une seconde position dans laquelle le second plan théorique est perpendiculaire au premier, l'axe de pivotement de chaque partie latérale 40 étant perpendiculaire au plan contenant les lignes de pliage des rabats de fond. De plus, le corps principal 39 est dimensionné pour que l'axe de pivotement de chaque partie latérale 40 appartienne également, en utilisation, à un plan perpendiculaire au premier plan théorique de contact et passant par la ligne de pliage des deux parois latérales P adjacentes.

Une partie secondaire de préhension 41 est reliée au corps principal 39 et s'étend à partir d'un côté de ce dernier de façon à être en regard d'un grand rabat de fond Rf avec le flan de carton encore plié à plat dans le magasin d'alimentation. Les deux autres parties secondaires de préhension 41 sont chacune reliées à une partie latérale 40 respective et s'étendent elles-aussi de façon à être chacune en regard d'un petit rabat de fond rf respectif.

Les parties secondaires de préhension 41 sont toutes munies d'organes de préhension, notamment des ventouses, de telle sorte qu'elles peuvent elles-aussi saisir la caisse C.

La partie secondaire de préhension 41 s'étendant à partir du corps principal 39 y est reliée à pivotement autour d'un axe qui est perpendiculaire aux seconds plans théoriques de contact lorsque les parties latérales 40 ont été pivotées à 90° du corps principal 39, et entre une première position, dans laquelle les organes de préhension de la partie secondaire de préhension 41 sont dans le premier plan théorique de contact, et une seconde position, dans laquelle la partie secondaire de préhension 41 a été pivotée de 90° vers l'extérieur, de façon à relever le grand rabat de fond Rf qu'elle a saisi.

Les parties secondaires de préhension 41 s'étendant à partir des parties latérales 40 y sont reliées à pivotement autour d'un axe qui est perpendiculaire au premier plan théorique de contact lorsque les parties latérales 40 ont été pivotées à 90° du corps principal 39, et entre une première position, dans laquelle les organes de préhension des parties secondaires de préhension 41 sont dans le second plan théorique de contact, et une seconde position, dans laquelle les parties secondaires de préhension 41 ont été pivotées de 90° vers l'extérieur, de façon à relever les petits rabats de fond rf qu'elles ont saisi.

De préférence, en utilisation, l'axe de pivotement de chaque partie secondaire de préhension 41 est parallèle et à la même hauteur que la ligne de pliage entre le rabat de fond qu'elle a saisi et la paroi latérale P correspondante, de sorte que le pivotement de la partie secondaire de préhension 41 conduit bien au pliage du rabat de fond correspondant autour de sa ligne de pliage normale, sans déformation du rabat de fond.

Les liaisons pivots entre les différentes parties 40, 41 et le corps principal 39 pourront être réalisées par tout moyen approprié et les pivotements pourront être entraînés et commandés également par tout moyen approprié, tous en soi bien connu dans la technique. De préférence, l'outil de préhension 10 portera les actionneurs permettant d'obtenir ces pivotements, ainsi qu'éventuellement les moyens pneumatiques pour obtenir la saisie de la caisse par les ventouses.

Si l'on se réfère à la Figure 16, on peut voir que l'outil de préhension 10 est en mesure de saisir un flan plié à plat et stocké dans un magasin d'alimentation, par le corps principal 39, une partie latérale 40 et les parties secondaires de préhension 41 correspondantes.

Par exemple, le bras robotique 9 peut ensuite lever la caisse C et ladite partie latérale 40 est pivotée à 90° pour mettre en volume les parois latérales P de la caisse C. L'autre partie latérale 40, et la partie secondaire de préhension 41 correspondante, peut alors être pivotée pour venir saisir la paroi latérale P respective de la caisse C, tandis que ladite partie secondaire de préhension 41 saisit le petit rabat de fond rf.

Les parties secondaires de préhension 41 peuvent ensuite être amenées à pivoter vers le haut pour relever les rabats de fond jusqu'à l'horizontale, en vue de l'opération de coiffage comme illustré sur la Figure 1.

L'outil de préhension 10, porté par le bras robotique 9, permet ainsi l'extraction du flan à partir d'un magasin d'alimentation, la mise en volume de la caisse C avec trois rabats de fond relevés à l'horizontale, et le coiffage de la caisse C ainsi mise en volume sur un lot L de produits.

## Revendications

1. Machine (1 ; 1') d'encaissage de produits dans une caisse (C) à rabats de type caisse américaine, la caisse (C) comprenant ainsi deux premières parois latérales (P) opposées et deux secondes parois latérales (P) opposées, les premières parois latérales (P) étant prolongées chacune aux deux extrémités par un premier rabat tandis que les secondes parois latérales (P) sont prolongées chacune aux deux extrémités par un second rabat, la machine (1 ; 1') comprenant des moyens (3) de préhension de caisse aptes à déplacer dans l'espace une caisse (C) mise en volume et des moyens de constitution du fond de la caisse (C) par pliage des premiers rabats (rf) et seconds rabats (Rf) destinés à constituer le fond de la caisse (C), dits rabats de fond, les moyens de constitution du fond de la caisse (C) comprenant des premiers moyens de pliage (4 ; 4') pour plier les premiers rabats de fond (rf) en position fermée et des seconds moyens de pliage (5) pour plier les seconds rabats de fond (Rf) en position fermée,
**caractérisée par le fait que** la machine (1 ; 1') comprend un support d'entrée (2) qui présente une surface de support (6) plane horizontale destinée à supporter un lot (L) de produits à encaisser, **par le fait que** les moyens de préhension (3) sont en outre aptes à plier vers l'extérieur au moins trois des rabats de fond (rf, Rf) de façon à ce qu'ils soient dégagés de l'ouverture correspondante de la caisse (C) mise en volume, et aptes à déplacer verticalement la caisse (C) ainsi mise en volume pour venir coiffer, avec celle-ci, le lot (L) de produits reposant sur la surface de support (6), les parois latérales (P) de la caisse (C) entourant alors latéralement le lot (L) de produits et les rabats de fond (rf, Rf) étant pliés vers l'extérieur et sensiblement à l'horizontale, et **par le fait que** les premiers moyens de pliage (4 ; 4') comprennent :
- au moins un volet (14, 15 ; 14', 15') monté en travers d'une ouverture de montage (17) ménagée dans une partie de montage plane et horizontale d'une plaque fixe (13 ; 13') adjacente à la surface de support (6), l'au moins un volet (14, 15 ; 14', 15') étant monté pivotant autour d'un axe de pivotement de façon à être apte à être incliné par rapport à la partie de montage de manière sélective dans une première position de réception, dans laquelle un bord (18b ; 18b'), dit mobile, de l'au moins un volet (14, 15 ; 14', 15'), parallèle à l'axe de pivotement, se situe au-dessus du plan horizontal de la partie de montage, créant ainsi une fente verticale qui se situe au-dessus de la partie de montage et qui débouche dans l'ouverture de montage (17), fente verticale par laquelle un premier rabat de fond (rf) peut être introduit dans l'ouverture de montage (17) et sous l'au moins un volet (14, 15 ; 14', 15'), et dans une seconde position de pliage, dans laquelle ledit bord mobile (18b ; 18b') se situe au-dessous du plan horizontal de la plaque fixe (13 ; 13'), ledit bord mobile (18b ; 18b') étant par ailleurs à distance du bord immédiatement voisin de l'ouverture de montage (17), de telle sorte qu'est présent entre ces deux un intervalle horizontal par lequel un premier rabat de fond (rf) peut passer ; et
- des moyens de déplacement (16 ; 16') aptes à déplacer la caisse (C), coiffant le lot (L) de produits, dans une direction de translation perpendiculaire à l'axe de pivotement de l'au moins un volet (14, 15 ; 14', 15'), de façon à permettre le pliage en position fermée de chaque premier rabat de fond (rf) par un premier déplacement de la caisse (C) en direction de l'axe de pivotement de l'au moins un volet (14, 15 ; 14', 15'), avec ce dernier dans la première position de réception, jusqu'à placer la caisse (C) dans une position dite de préparation, dans laquelle le premier rabat de fond (rf) se trouve sous l'au moins un volet (14, 15 ; 14', 15') et la paroi latérale (P) respective de la caisse (C) se situe au-dessus de l'intervalle horizontal, puis, après que l'au moins un volet (14, 15 ; 14', 15') a été pivoté de la première position de réception à la seconde position de pliage, par un second déplacement de la caisse (C) dans la même direction jusqu'à ce que la caisse (C) passe au-delà de l'au moins un volet (14, 15 ; 14', 15'), ce par quoi le premier rabat de fond (rf) est plié en position fermée.

2. Machine (1 ; 1') selon la revendication 1, **caractérisée par le fait que** les premiers moyens de pliage (4 ; 4') comprennent des premier et second volets (14, 15 ; 14', 15') chacun dédiés au pliage en position fermée de l'un respectif des deux premiers rabats de fond (rf), l'axe de pivotement de chaque volet (14, 15 ; 14' ; 15') se situe dans la région du bord (18a ; 18a') du volet (14, 15 ; 14' ; 15') qui est opposé au bord mobile (18b ; 18b') du volet (14, 15 ; 14' ; 15'), chaque volet (14, 15 ; 14' ; 15') comprenant ainsi un unique bord mobile (18b ; 18b').

3. Machine (1) selon la revendication 2, **caractérisée par le fait que** les axes de pivotement des deux volets (14, 15) forment un angle, notamment sont perpendiculaires, et les moyens de déplacement (16) comprennent en outre une plateforme rotative (19) montée sur la plaque fixe (13), interposée entre les deux volets (14, 15) et apte à tourner autour d'un axe vertical, chaque volet (14, 15) étant en regard de la plateforme rotative (19) et cette dernière étant apte à recevoir la caisse (C), coiffant le lot (L) de produits et avec un premier rabat de fond (rf) placé en position fermée par le premier volet (14), puis à faire tourner la caisse (C) pour placer l'autre premier rabat de fond (rf) devant le bord mobile (18b) du second volet (15).

4. Machine (1) selon la revendication 3, **caractérisée par le fait que** les moyens de déplacement (16) comprennent des premier et second bras (20, 21) qui sont chacun montés mobiles en translation sur respectivement des premier et second rails (23, 24), le premier rail (23) étant perpendiculaire à l'axe de pivotement du premier volet (14) et s'étendant latéralement au support d'entrée (2) et à la plaque fixe (13), côté opposé à celui où se situe le second volet (15), de telle sorte que le premier bras (20) est apte à pousser la caisse (C), coiffant le lot (L) de produits, du support d'entrée (2) jusqu'à la plateforme rotative (19), le second rail (24) étant perpendiculaire à l'axe de pivotement du second volet (15) et s'étendant latéralement à la plaque fixe (13), côté opposé à celui où se situe le premier volet (14), de telle sorte que le second bras (21) est apte à pousser la caisse (C) de la plateforme rotative (19) jusqu'au-delà du second volet (15).

5. Machine (1') selon la revendication 2, **caractérisée par le fait que** les deux volets (14', 15') sont placés l'un à la suite de l'autre avec leurs axes de pivotement parallèles entre eux et leurs bords mobiles (18b') à l'opposé de l'un de l'autre, et les moyens de déplacement (16') sont aptes à déplacer la caisse (C), coiffant le lot (L) de produits, dans une première direction de translation d'un côté du premier volet (14') jusqu'au-delà du second volet (15'), déplacement au cours duquel le premier rabat de fond (rf) est plié en position fermé par le premier volet (14'), puis à déplacer la caisse (C) dans une seconde direction de translation, opposée à la première direction, jusqu'au moins au-delà du second volet (15'), déplacement au cours duquel l'autre premier petit rabat de fond (rf) est plié en position fermé par le second volet (15').

6. Machine (1') selon la revendication 5, **caractérisée par le fait que** les moyens de déplacement (16') comprennent des premier et second bras (20', 21') qui sont chacun montés mobiles en translation sur un rail (23') perpendiculaire aux axes de pivotement des volets (14', 15') et s'étendant latéralement au support d'entrée (2) et à la plaque fixe (13'), de telle sorte que le premier bras (20') est apte à pousser dans la première direction de translation la caisse (C), coiffant le lot (L) de produits, du support d'entrée (2) jusqu'au-delà du second volet (15'), et le second bras (21') est apte à pousser dans la seconde direction de translation la caisse (C) jusqu'au moins au-delà du second volet (15'), les premier et second bras (20', 21') étant soit montés sur un rail commun (23), soit montés chacun sur un rail respectif avec les rails situés de part et d'autre de la plaque fixe (13').

7. Machine selon la revendication 1, **caractérisée par le fait que** les premiers moyens de pliage comprennent un seul volet, les moyens de déplacement étant en outre aptes à déplacer au besoin la caisse, après fermeture d'un premier rabat de fond (rf), pour placer la caisse (C) en regard du bord mobile du volet dans la première position de réception et orientée avec l'autre premier petit rabat de fond (rf) devant ledit bord mobile.

8. Machine selon la revendication 7, **caractérisée par le fait que** l'axe de pivotement du volet des premiers moyens de pliage se situe dans la région du bord du volet qui est opposé au bord mobile du volet, le volet comprenant ainsi un unique bord mobile.

9. Machine selon la revendication 7, **caractérisée par le fait que** l'axe de pivotement du volet des premiers moyens de pliage coïncide avec l'axe central du volet, de telle sorte que chacun des deux bords du volet parallèles à l'axe de pivotement sont des bords mobiles.

10. Machine (1 ; 1') selon l'une quelconque des revendications 1 à 9, **caractérisée par le fait que** les moyens de préhension (3) comprennent un bras robotique (9) portant un outil de préhension (10) qui comprend un corps principal (39), destiné à venir en contact avec l'une des parois latérales (P) de la caisse (C), et au moins une partie latérale (40) sur un côté du corps principal (39), de préférence deux parties latérales (40) l'une de chaque côté du corps principal (39), la ou chacune de l'au moins une partie latérale étant destinée à être en contact, au moins une fois les parois latérales (P) de la caisse (C) mises en volume, avec l'une respective des deux parois latérales (P) adjacentes à la paroi latérale (P) en contact avec le corps principal (39), le corps principal (39) et l'au moins une partie latérale (40) étant à cet effet munis d'organes de préhension (43) pour saisir la caisse (C), les organes de préhension (43) dont est muni le corps principal (39) définissant un premier plan théorique de contact avec la caisse (C) tandis que les organes de préhension dont est munie l'au moins une partie latérale (40) définissent un second plan théorique de contact qui est, une fois les parois latérales (P) de la caisse (C) mises en volume, perpendiculaire audit premier plan théorique de contact, l'outil de préhension (10) comprenant en outre, s'étendant à partir de chacun du corps principal (39) et de l'au moins une partie latérale (40), une partie secondaire de préhension (41) qui est destinée à venir en regard d'un rabat de fond (rf, Rf) et qui comprend des organes de préhension aptes à venir en contact et saisir ledit rabat de fond (rf, Rf), les organes de préhension de chaque partie secondaire de préhension (41) étant par ailleurs aptes à pivoter autour d'un axe de pivotement perpendiculaire audit second plan théorique de contact dans le cas de la partie secondaire de préhension (41) s'étendant à partir du corps principal (39) et autour d'un axe de pivotement perpendiculaire audit premier plan théorique de contact dans le cas d'une partie secondaire de préhension (41) s'étendant à partir d'une partie latérale (40), et, de préférence, chaque axe de pivotement appartenant également à un plan respectif qui passe par la ligne de pliage entre ledit rabat de fond (rf, Rf) correspondant et la paroi latérale (P) respective de la caisse (C), de telle sorte que chaque partie secondaire de préhension (41) est apte à plier vers l'extérieur le rabat de fond (rf, Rf) correspondant pour qu'il soit dégagé de l'ouverture de la caisse (C) mise en volume.

11. Machine (1 ; 1') selon la revendication 10, **caractérisée par le fait qu'**elle comprend en outre un élément de butée (8 ; 8') qui se situe, en utilisation, au-dessus de la surface de support (6) du support d'entrée (2) et latéralement au lot (L) de produits à encaisser, l'élément de butée (8 ; 8') définissant à une partie supérieure (8a ; 8'a) de celui-ci une butée contre laquelle l'outil de préhension (10) est apte, une fois la caisse (C) mise en volume, à venir faire appuyer le rabat de fond (Rf) libre, opposé à celui saisi par la partie secondaire de préhension (41) s'étendant à partir du corps principal (39) de l'outil de préhension (10), de façon à plier le rabat de fond (Rf) libre vers l'extérieur au début du déplacement vertical vers le bas de la caisse (C) pour le coiffage du lot (L) de produits.

12. Machine (1) selon l'une quelconque des revendications 1 à 11, **caractérisée par le fait que** les seconds moyens de pliage (5), pour plier les seconds rabats de fond (Rf) en position fermée, sont placés en aval des premiers moyens de pliage (4) et comprennent :
- une bande (25) longitudinale de tôle dont la direction longitudinale est parallèle à la direction de déplacement de la caisse (C) le long des seconds moyens de pliage (5), la bande (25) s'étendant en travers d'une ouverture définissant de chaque côté de la bande (25) un espace libre, la bande (25) étant apte à supporter la caisse (C) avec les premiers rabats de fond (rf) en position fermée, les deux espaces libres permettant aux deux seconds rabats de fond (Rf) de venir à la verticale sous l'effet de leur propre poids ;
- un dispositif de pliage (31) situé sous ladite bande (25) et apte à plier les deux seconds rabats de fond (Rf) de leur position à la verticale à la position fermée, où ils se situent contre la face inférieure de ladite bande (25) ;
- un plateau (30) situé en aval de ladite ouverture et du dispositif de pliage (31), à une hauteur inférieure à celle de la bande (25), et apte à supporter les seconds rabats de fond (Rf) après que ceux-ci ont été pliés en position fermée par le dispositif de pliage (31) ; et
- des moyens de déplacement de la caisse (C) le long de ladite bande (25) puis, après pliage des seconds rabats de fond (Rf), jusqu'audit plateau (30).

## Patentansprüche

1. - Maschine (1; 1') zum Einpacken von Produkten in eine Schachtel (C) mit Laschen vom Typ Faltkarton, die Schachtel (C) umfassend somit zwei gegenüberliegende erste Seitenwände (P) und zwei gegenüberliegende zweite Seitenwände (P), wobei die ersten Seitenwände (P) jeweils an beiden Enden durch eine erste Lasche verlängert sind, während die zweiten Seitenwände (P) jeweils an beiden Enden durch eine zweite Lasche verlängert sind, die Maschine (1; 1') umfassend Einrichtungen (3) zum Greifen der Schachtel die geeignet sind, eine in Volumen gebrachte Schachtel (C) im Raum zu bewegen, und Erstellungseinrichtungen des Bodens der Schachtel (C) durch Falten der ersten Laschen (rf) und der zweiten Laschen (Rf), bezeichnet als Bodenlaschen, die dazu bestimmt sind, den Boden der Schachtel (C) zu bilden, die Erstellungseinrichtungen des Bodens der Schachtel (C), umfassend erste Falteinrichtungen (4; 4') zum Falten der ersten Bodenlaschen (rf) in geschlossene Position und zweite Falteinrichtungen (5) zum Falten der zweiten Bodenlaschen (Rf) in geschlossene Position,
**dadurch gekennzeichnet, dass** die Maschine (1; 1') einen Eingangsträger (2) umfasst, der eine horizontale, ebene Tragfläche (6) aufweist, die dazu bestimmt ist, eine Losgröße (L) von einzupackenden Produkten zu tragen, dadurch, dass die Greifeinrichtungen (3) ferner geeignet sind, um mindestens drei der Bodenlaschen (rf, Rf) nach außen zu falten, sodass sie von der entsprechenden Öffnung der in Volumen gebrachten Schachtel (C) frei sind, und geeignet sind, um die somit in Volumen gebrachte Schachtel (C) vertikal zu verschieben, um damit die auf der Tragfläche (6) liegende Losgröße (L) von Produkten zu bedecken, wobei die Seitenwände (P) der Schachtel (C) dann die Losgröße (L) von Produkten seitlich umgeben und die Bodenlaschen (rf, Rf) nach außen und im Wesentlichen horizontal gefaltet sind, und dadurch, dass die ersten Falteinrichtungen (4; 4') Folgendes umfassen:
- mindestens eine Klappe (14, 15; 14', 15'), die quer zu einer Montageöffnung (17) montiert ist, die in einem ebenen und horizontalen Montageabschnitt einer festen Platte (13; 13') angrenzend an die Tragfläche (6) ausgebildet ist, wobei die mindestens eine Klappe (14, 15; 14', 15') schwenkbar um eine Schwenkachse montiert ist, um in der Lage zu sein, in Bezug auf den Montageabschnitt selektiv in eine erste Aufnahmeposition geneigt zu werden, in der eine sogenannte bewegliche Kante (18b; 18b') der mindestens einen Klappe (14, 15; 14', 15'), parallel zu der Schwenkachse, sich oberhalb der horizontalen Ebene des Montageabschnitts befindet, wodurch ein vertikaler Schlitz geschaffen wird, der sich oberhalb des Montageabschnitts befindet und die in die Montageöffnung (17) mündet, wobei durch den vertikalen Schlitz eine erste Bodenlasche (rf) in die Montageöffnung (17) und unter die mindestens eine Klappe (14, 15; 14', 15') eingeführt werden kann, und in eine zweite Faltposition, in der sich die bewegliche Kante (18b; 18b') unterhalb der horizontalen Ebene der festen Platte (13; 13') befindet, die bewegliche Kante (18b; 18b') ferner von der unmittelbar benachbarten Kante der Montageöffnung (17) beabstandet ist, sodass zwischen diesen zwei ein horizontaler Abstand vorhanden ist, durch den eine erste Bodenlasche (rf) verlaufen kann; und
- Verschiebeeinrichtungen (16; 16'), die geeignet sind, um die Schachtel (C), die die Losgröße (L) von Produkten überdeckt, in einer Translationsrichtung senkrecht zu der Schwenkachse der mindestens einen Klappe (14, 15; 14', 15') zu verschieben, um das Falten in geschlossene Position jeder ersten Bodenlasche (rf) durch eine erste Verschiebung der Schachtel (C) in Richtung der Schwenkachse der mindestens einen Klappe (14, 15; 14', 15') zu ermöglichen, wobei diese letztere in der ersten Aufnahmeposition ist, bis die Schachtel (C) in eine sogenannte Vorbereitungsposition gebracht ist, in der sich die erste Bodenlasche (rf) unter der mindestens einen Klappe (14, 15; 14', 15') befindet und die jeweilige Seitenwand (P) der Schachtel (C) sich über dem horizontalen Abstand befindet, dann, nachdem die mindestens eine Klappe (14, 15; 14', 15') von der ersten Aufnahmeposition in die zweite Faltposition geschwenkt wurde, durch eine zweite Bewegung der Schachtel (C) in die gleiche Richtung, bis die Schachtel (C) über die mindestens eine Klappe (14, 15; 14', 15') hinaus verläuft, wodurch die erste Bodenlasche (rf) in geschlossene Position gefaltet wird.

2. - Maschine (1; 1') nach Anspruch 1, **dadurch gekennzeichnet, dass** die ersten Falteinrichtungen (4; 4') erste und zweite Klappen (14, 15; 14', 15') umfassen, die jeweils dazu bestimmt sind, eine jeweilige der zwei ersten Bodenlaschen (rf) in geschlossene Position zu falten, sich die Schwenkachse jeder Klappe (14, 15; 14'; 15') in dem Bereich der Kante (18a; 18a') der Klappe (14, 15; 14'; 15') befindet, die der beweglichen Kante (18b; 18b') der Klappe (14, 15; 14'; 15') gegenüberliegt, jede Klappe (14, 15; 14'; 15') somit umfassend eine einzelne bewegliche Kante (18b; 18b').

3. - Maschine (1) nach Anspruch 2, **dadurch gekennzeichnet, dass** die Schwenkachsen der zwei Klappen (14, 15) einen Winkel bilden, insbesondere senkrecht sind, und die Verschiebeeinrichtungen (16) ferner eine Drehplattform (19) umfassen, die auf der festen Platte (13) montiert ist, zwischen den zwei Klappen (14, 15) eingefügt ist und geeignet ist, um um eine vertikale Achse zu drehen, wobei jede Klappe (14, 15) gegenüber der Drehplattform (19) ist und letztere geeignet ist, um die Schachtel (C) aufzunehmen, die die Losgröße (L) von Produkten bedeckt und wobei eine erste Bodenlasche (rf) durch die erste Klappe (14) in die geschlossene Position gebracht ist, dann die Schachtel (C) zu drehen, um die andere erste Bodenlasche (rf) vor der beweglichen Kante (18b) der zweiten Klappe (15) zu platzieren.

4. - Maschine (1) nach Anspruch 3, **dadurch gekennzeichnet, dass** die Verschiebeeinrichtungen (16) einen ersten und einen zweiten Arm (20, 21) umfassen, die jeweils translatorisch beweglich auf einer jeweiligen von einer ersten und einer zweiten Schiene (23, 24) montiert sind, wobei die erste Schiene (23) senkrecht zu der Schwenkachse der ersten Klappe (14) ist und sich seitlich von dem Eingangsträger (2) und der festen Platte (13) erstreckt, und dies auf der Seite, die jener gegenüber ist, an der sich die zweite Klappe (15) befindet, sodass der erste Arm (20) geeignet ist, um die Schachtel (C), die den Losgröße (L) von Produkten abdeckt, von der Eingangsträger (2) auf die Drehplattform (19) zu schieben, wobei die zweite Schiene (24) senkrecht zu der Schwenkachse der zweiten Klappe (15) ist und sich seitlich von der festen Platte (13) erstreckt, und dies auf der Seite, die jener gegenüber ist, an der sich die erste Klappe (14) befindet, sodass der zweite Arm (21) geeignet ist, um die Schachtel (C) der Drehplattform (19) bis über die zweite Klappe (15) hinaus zu schieben.

5. - Maschine (1') nach Anspruch 2, **dadurch gekennzeichnet, dass** die zwei Klappen (14', 15') hintereinander angeordnet sind, wobei ihre Schwenkachsen parallel zueinander und ihre beweglichen Kanten (18b') einander gegenüberliegen, und die Verschiebeeinrichtungen (16') geeignet sind, um die Schachtel (C), die die Losgröße (L) von Produkten bedeckt, in einer ersten Translationsrichtung von einer Seite der ersten Klappe (14') bis über die zweite Klappe (15') hinaus zu verschieben, wobei die erste Bodenlasche (rf) während des Verschiebens durch die erste Klappe (14') in geschlossene Position gefaltet wird, und dann die Schachtel (C) in einer zweiten Translationsrichtung, die der ersten Richtung entgegengesetzt ist, bis mindestens hinter die zweite Klappe (15') zu verschieben, wobei die andere erste kleine Bodenlasche (rf) während des Verschiebens durch die zweite Klappe (15') in geschlossene Position gefaltet wird.

6. - Maschine (1') nach Anspruch 5, **dadurch gekennzeichnet, dass** die Verschiebeeinrichtungen (16') einen ersten und einen zweiten Arm (20', 21') umfassen, die jeweils translatorisch beweglich auf einer Schiene (23') senkrecht zu den Schwenkachsen der Klappen (14', 15') und die sich seitlich zu dem Eingangsträger (2) und zu der festen Platte (13') erstreckt, montiert sind, sodass der erste Arm (20') dazu geeignet ist, die Schachtel (C), die die Losgröße (L) von Produkten abdeckt, in der ersten Translationsrichtung von dem Eingangsträger (2) bis hinter die zweite Klappe (15') zu schieben, und wobei der zweite Arm (21') geeignet ist, um die Schachtel (C) in der zweiten Translationsrichtung bis mindestens hinter die zweite Klappe (15') zu schieben, wobei der erste und der zweite Arm (20', 21') entweder an einer gemeinsamen Schiene (23') montiert sind oder jeweils an einer entsprechenden Schiene mit den Schienen auf beiden Seiten der festen Platte (13') montiert sind.

7. - Maschine nach Anspruch 1, **dadurch gekennzeichnet, dass** die ersten Falteinrichtungen eine einzige Klappe umfassen, wobei die Verschiebeeinrichtungen ferner geeignet sind, um die Schachtel (C) nach Schließen einer ersten Bodenlasche (rf) bei Bedarf zu verschieben, um die Schachtel (C) gegenüber der beweglichen Kante der Klappe in der ersten Aufnahmeposition und ausgerichtet mit der anderen ersten kleinen Bodenlasche (rf) vor der beweglichen Kante zu platzieren.

8. - Maschine nach Anspruch 7, **dadurch gekennzeichnet, dass** die Schwenkachse der Klappe der ersten Falteinrichtungen sich in dem Bereich der Kante der Klappe befindet, der der beweglichen Kante der Klappe gegenüberliegt, die Klappe somit umfassend eine einzige bewegliche Kante.

9. - Maschine nach Anspruch 7, **dadurch gekennzeichnet, dass** die Schwenkachse der Klappe der ersten Falteinrichtungen mit der Mittelachse der Klappe zusammenfällt, sodass jede der zwei Kanten der Klappe, die parallel zu der Schwenkachse sind, bewegliche Kanten sind.

10. - Maschine (1; 1') nach einem der Ansprüche 1 bis 9, **dadurch gekennzeichnet, dass** die Greifeinrichtungen (3) einen Roboterarm (9) umfassen, der ein Greifwerkzeug (10) trägt, das einen Hauptkörper (39), der dazu bestimmt ist, mit einer der Seitenwände (P) der Schachtel (C) in Kontakt zu kommen, und mindestens ein Seitenteil (40) auf einer Seite des Hauptkörpers (39), vorzugsweise zwei Seitenteile (40), eines auf jeder Seite des Hauptkörpers (39), umfasst, wobei der oder jeder des mindestens einen Seitenteils dazu bestimmt ist, mindestens einmal, wenn die Seitenwände (P) der Schachtel (C) in Volumen gebracht sind, mit einer jeweiligen der zwei Seitenwände (P) angrenzend an die Seitenwand (P) in Kontakt mit dem Hauptkörper (39) ist, in Kontakt zu sein, wobei der Hauptkörper (39) und das mindestens eine Seitenteil (40) zu diesem Zweck mit Greifelementen (43) zum Greifen der Schachtel (C) versehen sind, wobei die Greifelemente (43), mit denen der Hauptkörper (39) versehen ist, eine erste theoretische Kontaktebene mit der Schachtel (C) definieren, während die Greifelemente, mit denen das mindestens eine Seitenteil (40) versehen ist, eine zweite theoretische Kontaktebene definieren, die, wenn die Seitenwände (P) der Schachtel (C) einmal in Volumen gebracht sind, senkrecht zu der ersten theoretischen Kontaktebene ist, das Greifwerkzeug (10) ferner umfassend, sich ausgehend von jedem von dem Hauptkörper (39) und dem mindestens einen Seitenteil (40) erstreckend, einen sekundären Greifabschnitt (41), der dazu bestimmt ist, einer Bodenlasche (rf, Rf) gegenüberzuliegen, und der Greifelemente umfasst, die geeignet sind, um mit der Bodenlasche (rf, Rf) in Kontakt zu kommen und sie zu ergreifen, wobei die Greifelemente von jedem sekundären Greifabschnitts (41) ferner in der Lage sind, um eine Schwenkachse senkrecht zu der zweiten theoretischen Kontaktebene im Fall des sekundären Greifabschnitts (41), der sich von dem Hauptkörper (39) aus erstreckt, und um eine Schwenkachse senkrecht zu der ersten theoretischen Kontaktebene im Fall eines sekundären Greifabschnitts (41), der sich von einem Seitenteil (40) aus erstreckt, zu schwenken, und, vorzugsweise, wobei jede Schwenkachse auch zu einer jeweiligen Ebene gehört, die durch die Faltlinie zwischen der entsprechenden Bodenlasche (rf, Rf) und der jeweiligen Seitenwand (P) der Schachtel (C) verläuft, sodass jedes sekundäre Greifelement (41) geeignet ist, um die entsprechende Bodenlasche (rf, Rf) nach außen zu falten, damit sie von der Öffnung der in Volumen gebrachten Schachtel (C) frei ist.

11. - Maschine (1; 1') nach Anspruch 10, **dadurch gekennzeichnet, dass** sie ferner ein Anschlagelement (8; 8') umfasst, das sich im Gebrauch oberhalb der Tragfläche (6) des Eingangsträgers (2) und seitlich von der Losgröße (L) von einzupackenden Produkten befindet, wobei das Anschlagelement (8; 8') an einem oberen Abschnitt (8a; 8'a) davon einen Anschlag definiert, gegen den das Greifwerkzeug (10), sobald die Schachtel (C) in Volumen gebracht ist, die freie Bodenlasche (Rf) drücken kann, entgegengesetzt zu jener, die von dem sekundären Greifabschnitt (41) ergriffen wird, das sich von dem Hauptkörper (39) des Greifwerkzeugs (10) aus erstreckt, um die freie Bodenlasche (Rf) zu Beginn der vertikalen Abwärtsbewegung der Schachtel (C) zum Bedecken der Losgröße (L) von Produkten nach außen zu falten.

12. - Maschine (1) nach einem der Ansprüche 1 bis 11, **dadurch gekennzeichnet, dass** die zweiten Falteinrichtungen (5), um die zweiten Bodenlaschen (Rf) in geschlossene Position zu falten, stromabwärts von den ersten Falteinrichtungen (4) angeordnet sind und umfassend:
- einen längsgerichteten Streifen (25) aus Blech, dessen Längsrichtung parallel zu der Verschieberichtung der Schachtel (C) entlang der zweiten Falteinrichtungen (5) ist, wobei sich der Streifen (25) quer über eine Öffnung erstreckt, die auf jeder Seite des Streifens (25) einen freien Raum definiert, wobei das Band (25) geeignet ist, um die Schachtel (C) mit den ersten Bodenlaschen (rf) in geschlossener Position zu tragen, wobei die zwei Freiräume es den zwei zweiten Bodenlaschen (Rf) ermöglichen, unter der Wirkung ihres eigenen Gewichts in die Senkrechte zu kommen;
- eine Faltvorrichtung (31), die sich unter dem Streifen (25) befindet und geeignet ist, um die zwei zweiten Bodenlaschen (Rf) aus ihrer senkrechten Position in die geschlossene Position zu falten, in der sie an der Unterseite des Streifens (25) anliegen;
- eine Platte (30), die sich stromabwärts von der Öffnung und der Faltvorrichtung (31) befindet, auf einer Höhe, die niedriger ist als die des Streifens (25), und die geeignet ist, um die zweiten Bodenlaschen (Rf) zu tragen, nachdem diese durch die Faltvorrichtung (31) in geschlossene Position gefaltet wurden; und
- Verschiebeeinrichtungen der Schachtel (C) entlang des Streifens (25), dann, nach Falten der zweiten Bodenlaschen (Rf), bis zu der Platte (30).

## Claims

1. - Machine (1; 1') for packing products in a box (C) with flaps of the American box type, the box (C) thus comprising two first opposite side walls (P) and two second opposite side walls (P), the first side walls (P) being each extended at both ends by a first flap while the second side walls (P) are each extended at both ends by a second flap, the machine (1; 1') comprising box gripping means (3) capable of moving in space a box (C) that has been erected and means for forming the bottom of the box (C) by folding the first flaps (rf) and the second flaps (Rf) intended to form the bottom of the box (C), so-called bottom flaps, the means for forming the bottom of the box (C) comprising first folding means (4; 4') for folding the first bottom flaps (rf) into the closed position and second folding means (5) for folding the second bottom flaps (Rf) into the closed position,
**characterised in that** the machine (1; 1') comprises an input support (2) which has a flat horizontal support surface (6) intended to support a batch (L) of products to be packed, **in that** the gripping means (3) are further capable of folding outwards at least three of the bottom flaps (rf, Rf) so that they are clear of the corresponding opening of the box (C) that has been erected, and capable of moving vertically the box (C), thus erected, in order to cover, with it, the batch (L) of products resting on the support surface (6), the side walls (P) of the box (C) then laterally surrounding the batch (L) of products and the bottom flaps (rf, Rf) being folded outwards and substantially horizontally, and **in that** the first folding means (4; 4') comprise:
- at least one panel (14, 15; 14', 15') mounted across a mounting aperture (17) provided in a flat horizontal mounting portion of a fixed plate (13; 13') adjacent the support surface (6), the at least one panel (14, 15; 14', 15') being pivotally mounted about a pivot axis so as to be selectively tiltable relative to the mounting portion into a first receiving position, in which a so-called mobile edge (18b; 18b') of the at least one panel (14, 15; ; 14', 15'), parallel to the pivot axis, is located above the horizontal plane of the mounting portion, thus creating a vertical slot which is located above the mounting portion and opens into the mounting opening (17), through which vertical slot a first bottom flap (rf) can be introduced into the mounting opening (17) and under the at least one panel (14, 15; 14', 15'), and into a second folding position, in which said movable edge (18b; 18b') is located below the horizontal plane of the fixed plate (13; 13'), said movable edge (18b; 18b') being further spaced from the edge immediately adjacent the mounting opening (17), so that there is a horizontal gap therebetween through which a first bottom flap (rf) can pass; and
- moving means (16; 16') capable of moving the box (C), covering the batch (L) of products, in a direction of translation perpendicular to the pivot axis of the at least one panel (14, 15; 14', 15'), so as to allow each first bottom flap (rf) to be folded into the closed position by a first movement of the box (C) toward the pivot axis of the at least one panel (14, 15; 14', 15'), with the latter in the first receiving position, until the box (C) is placed in a so-called preparation position, in which the first bottom flap (rf) is located below the at least one panel (14, 15; 14', 15') and the respective side wall (P) of the box (C) is located above the horizontal gap, then, after the at least one panel (14, 15 ; 14', 15') has been pivoted from the first receiving position to the second folding position, by a second movement of the box (C) in the same direction until the box (C) moves beyond the at least one panel (14, 15; 14', 15'), whereby the first bottom flap (rf) is folded into the closed position.

2. - Machine (1; 1') according to claim 1, **characterised in that** the first folding means (4; 4') comprise first and second panels (14, 15; 14', 15') each dedicated to fold into the closed position a respective one of the first two bottom flaps (rf), the pivot axis of each panel (14, 15; 14', 15') is located in the region of the edge (18a; 18a') of the panel (14, 15; 14', 15') that is opposite the movable edge (18b; 18b') of the panel (14, 15; 14'; 15'), each panel (14, 15; 14'; 15') thus comprising a single movable edge (18b; 18b').

3. - Machine (1) according to claim 2, **characterised in that** the pivot axes of the two panels (14, 15) form an angle, in particular are perpendicular, and the moving means (16) further comprise a rotating platform (19) mounted on the fixed plate (13), interposed between the two panels (14, 15) and capable of rotating about a vertical axis, each panel (14, 15) facing the rotating platform (19) and the latter being able to receive the box (C), covering the batch (L) of products and with a first bottom flap (rf) placed in the closed position by the first panel (14), then to rotate the box (C) to place the other first bottom flap (rf) in front of the movable edge (18b) of the second panel (15).

4. - Machine (1) according to claim 3, **characterised in that** the moving means (16) comprise first and second arms (20, 21) that are each mounted so as to be able to move in translation on first and second rails (23, 24) respectively, the first rail (23) being perpendicular to the pivot axis of the first panel (14) and extending laterally to the inlet support (2) and to the fixed plate (13), on the opposite side to that where the second panel (15) is located, so that the first arm (20) is able to push the box (C), covering the batch (L) of products, from the inlet support (2) to the rotating platform (19), the second rail (24) being perpendicular to the pivot axis of the second panel (15) and extending laterally to the fixed plate (13), on the opposite side to that where the first panel (14) is located, so that the second arm (21) is able to push the box (C) from the rotating platform (19) to beyond the second panel (15).

5. - Machine (1') according to claim 2, **characterised in that** the two panels (14', 15') are placed one after the other with their pivot axes parallel to each other and their movable edges (18b') opposite each other, and the moving means (16') are capable of moving the box (C), covering the batch (L) of products, in a first direction of translation from one side of the first panel (14') to beyond the second panel (15'), during which movement the first bottom flap (rf) is folded into the closed position by the first panel (14'), of then moving the box (C) in a second direction of translation, opposite to the first direction, at least to beyond the second panel (15'), during which movement the other first small bottom flap (rf) is folded into the closed position by the second panel (15').

6. - Machine (1') according to claim 5, **characterised in that** the moving means (16') comprise first and second arms (20', 21') that are each mounted so as to be able to move in translation on a rail (23') perpendicular to the pivot axes of the panels (14', 15') and extending laterally to the inlet support (2) and to the fixed plate (13'), so that the first arm (20') is able to push, in the first direction of translation, the box (C), covering the batch (L) of products, from the inlet support (2) to beyond the second panel (15'), and the second arm (21') is able to push, in the second direction of translation, the box (C) to beyond the second panel (15'), the first and second arms (20', 21') being either mounted on a common rail (23'), or each mounted on a respective rail with the rails located on either side of the fixed plate (13').

7. - Machine as claimed in claim 1, **characterised in that** the first folding means comprise a single panel, the moving means being further able to move the box as required, after a first bottom flap (rf) is closed, in order to place the box (C) facing the movable edge of the panel in the first receiving position and oriented with the other first small bottom flap (rf) in front of said movable edge.

8. - Machine according to claim 7, **characterised in that** the pivot axis of the panel of the first folding means is located in the region of the edge of the panel that is opposite the movable edge of the panel, the panel thus comprising a single movable edge.

9. - Machine according to claim 7, **characterised in that** the pivot axis of the panel of the first folding means coincides with the central axis of the panel, so that each of the two edges of the panel parallel to the pivot axis are movable edges.

10. - Machine (1; 1') according to any one of claims 1 to 9, **characterised in that** the gripping means (3) comprise a robotic arm (9) carrying a gripping tool (10) which comprises a main body (39), intended to come into contact with one of the side walls (P) of the box (C), and at least one side part (40) on one side of the main body (39), preferably two side parts (40) one on each side of the main body (39), the or each of the at least one side part being intended to contact, at least once the side walls (P) of the box (C) have been erected, with a respective one of the two side walls (P) adjacent to the side wall (P) in contact with the main body (39), the main body (39) and the at least one side part (40) being for this purpose provided with gripping members (43) for gripping the box (C), the gripping members (43) with which the main body (39) is provided defining a first theoretical plane of contact with the box (C) while the gripping members with which the at least one side part (40) is provided define a second theoretical plane of contact which is, once the side walls (P) of the box (C) have been erected, perpendicular to said first theoretical plane of contact, the gripping tool (10) further comprising, extending from each of the main body (39) and the at least one side part (40), a secondary gripping part (41) which is intended to face a bottom flap (rf, Rf) and which comprises gripping members able to come into contact with and grip said bottom flap (rf, Rf), the gripping members of each secondary gripping part (41) further being able to pivot about a pivot axis perpendicular to said second theoretical plane of contact in case the secondary gripping part (41) extends from the main body (39) and about a pivot axis perpendicular to said first theoretical plane of contact in case a secondary gripping part (41) extends from a side part (40), and, preferably, each pivot axis also belonging to a respective plane which passes through the folding line between said corresponding bottom flap (rf, Rf) and the respective side wall (P) of the box (C), so that each secondary gripping part (41) is able to fold the corresponding bottom flap (rf, Rf) outwards so that it is clear of the opening of the box (C) once erected.

11. - Machine (1; 1') according to claim 10, **characterised in that** it further comprises a stop element (8; 8') which is located, in use, above the support surface (6) of the inlet support (2) and laterally to the batch (L) of products to be packed, the stop element (8; 8') defining at an upper part (8a; 8'a) thereof a stop against which the gripping tool (10) is able, once the box (C) has been erected, to press the free bottom flap (Rf), opposite to that gripped by the secondary gripping part (41) extending from the main body (39) of the gripping tool (10), so as to fold the free bottom flap (Rf) outwards at the beginning of the downward vertical movement of the box (C) for covering the batch (L) of products.

12. - Machine (1) according to any one of claims 1 to 11, **characterised in that** the second folding means (5), for folding the second bottom flaps (Rf) into the closed position, are placed downstream of the first folding means (4) and comprise:
- a longitudinal strip (25) of sheet metal, the longitudinal direction of which is parallel to the direction of movement of the box (C) along the second folding means (5), the strip (25) extending through an opening defining a free space on each side of the strip (25), the strip (25) being able to support the box (C) with the first bottom flaps (rf) in the closed position, the two free spaces allowing the two second bottom flaps (Rf) to come to a vertical position under the effect of their own weight;
- a folding device (31) located below said strip (25) and able to fold the two second bottom flaps (Rf) from their vertical position to the closed position, where they lie against the underside of said strip (25);
- a tray (30) located downstream of said opening and of the folding device (31), at a height lower than that of the strip (25), and able to support the second bottom flaps (Rf) after they have been folded into the closed position by the folding device (31); and
- means for moving the box (C) along said strip (25) and then, after folding the second bottom flaps (Rf), to said tray (30).
